# FASCICULE DE BREVET EUROPEEN

(11) **EP 2 513 244 B1**
(45) Date de publication et mention de la délivrance du brevet: **16.09.2020**
(21) Numéro de dépôt: 10810942.2
(22) Date de dépôt: 16.12.2010
(51) Int. Cl.: C09K 5/04

(54) **PROCEDE METANT EN OEUVRE DE FLUIDES DE TRANSFERT DE CHALEUR A INFLAMMABILITE REDUITE**
VERFAHREN MIT WÄRMEÜBERTRAGUNGSFLÜSSIGKEITEN MIT VERRINGERTER EMTFLAMMBARKEIT
METHOD USING HEAT-TRANSFER FLUIDS HAVING REDUCED FLAMMABILITY

(30) Priorité: 18.12.2009 FR 0959175
(43) Date de publication de la demande: 24.10.2012
(73) Titulaire: Arkema France, 92700 Colombes (FR)
(72) Inventeur: ANDRE, David, F-69530 Brignais (FR); BOUSSAND, Béatrice, F-69110 Sainte Foy Les Lyon (FR); RACHED, Wissam, F-69630 Chaponost (FR)
(74) Mandataire: Hirsch & Associés
(86) Numéro de dépôt international: PCT/IB2010/055863
(87) Numéro de publication internationale: WO 2011/073934

(56) Documents cités:
- WO-A1-2009/047542
- WO-A1-2011/023923
- US-A1- 2008 230 738
- US-A1- 2009 305 876
- "Air conditioning", Wikipedia , 17 décembre 2009 (2009-12-17), XP002594955, Extrait de l'Internet: URL:http://en.wikipedia.org/w/index.php?ti tle=Air_conditioning&oldid=332232024 [extrait le 2010-08-02]
- TAKIZAWA K ET AL: "Flammability assessment of CH2?CFCF3: Comparison with fluoroalkenes and fluoroalkanes", JOURNAL OF HAZARDOUS MATERIALS, ELSEVIER, AMSTERDAM, NL LNKD- DOI:10.1016/J.JHAZMAT.2009.08.001, vol. 172, no. 2-3, 18 août 2009 (2009-08-18), pages 1329-1338, XP026719989, Online ISSN: 0304-3894 [extrait le 2009-08-08]
- "Definitions: Humidity", Healthy Heating , 18 mai 2008 (2008-05-18), XP002594956, Extrait de l'Internet: URL:http://web.archive.org/web/20080518174 151/http://www.healthyheating.com/Thermal_ Comfort_Working_Copy/Definitions/humidity. htm [extrait le 2010-08-02]

## Description

### DOMAINE DE L'INVENTION

La présente invention concerne l'utilisation de fluides de transfert de chaleur dont l'inflammabilité est réduite par une réduction de l'humidité relative de l'air, dans le cadre de systèmes de refroidissement ou de chauffage.

### ARRIERE-PLAN TECHNIQUE

Les fluides à base de composés fluorocarbonés sont largement utilisés dans de nombreux dispositifs industriels, notamment de climatisation, de pompe à chaleur ou de réfrigération. Ces dispositifs ont en commun de reposer sur un cycle thermodynamique comprenant la vaporisation du fluide à basse pression (dans laquelle le fluide absorbe de la chaleur) ; la compression du fluide vaporisé jusqu'à une pression élevée ; la condensation du fluide vaporisé en liquide à pression élevée (dans laquelle le fluide rejette de la chaleur) ; et la détente du fluide pour terminer le cycle.

Le choix d'un fluide de transfert de chaleur (qui peut être un composé pur ou un mélange de composés) est dicté d'une part par les propriétés thermodynamiques du fluide, et d'autre part par des contraintes supplémentaires.

En particulier, selon l'inflammabilité du fluide, des mesures de sécurité plus ou moins contraignantes doivent être prises pour l'utilisation de ce fluide dans certaines applications, ou bien l'utilisation de ce fluide peut même être proscrite dans d'autres applications.

Un autre critère important est celui de l'impact du fluide considéré sur l'environnement. C'est ainsi que les composés chlorés (chlorofluorocarbures et hydrochlorofluorocarbures) présentent le désavantage d'endommager la couche d'ozone. On leur préfère donc désormais généralement les composés non chlorés tels que les hydrofluorocarbures, les fluoroéthers et plus récemment les fluorooléfines (ou fluoroalcènes). Les fluorooléfines présentent en outre généralement un temps de vie court, et donc un potentiel de réchauffement global (GWP) plus faible que les autres composés.

A cet égard, les documents WO 2004/037913 et WO 2005/105947 enseignent l'utilisation de compositions comprenant au moins un fluoroalcène ayant trois ou quatre atomes de carbone, notamment le pentafluoropropène et le tétrafluoropropène, en tant que fluides de transfert de chaleur.

Les documents WO 2007/053697 et WO 2007/126414 divulguent des mélanges de fluorooléfines et d'autres composés de transfert de chaleur en tant que fluides de transfert de chaleur.

La demande de brevet WO 2009/047542 concerne des compositions de transfert de chaleur comprenant du 3,3,3-trifluoropropène (R-1243zf), du 1,1,1,2-tétrafluoroéthane (R-134a) et du difluorométhane (R-32) qui peuvent être utilisées dans des systèmes de ventilation.

« Air conditioning », Wikipedia (décembre 2009) est une présentation générale de la climatisation. Selon cet article la climatisation permet de stabiliser la température et l'humidité de l'air.

L'article de Takisawa et al., J. of Hazardous Materials, Elsevier vol. 172 (2-3), pages 1329-1338 (2009) concerne une étude en vue de pouvoir substituer d'autres fluides réfrigérants aux HFC dont le potentiel de réchauffement global (GWP) est élevé. Les HFC134a, HFC125 ou HFC32 ont des GWP de 1430 à 675. Cet article souligne l'importance de substituer des fluides dont le GWP est plus faible et propose soit l'usage de HFC à plus faible GWP comme c'est le cas pour HFC41 ou HFC161 ou bien des modifications dans le squelette carboné, qui conduisent aux fluoroalkenes, parmi lesquels le 1234yf (GWP=4). L'étude porte sur le 1234yf et sur l'inflammabilité des fluides pouvant remplacer les HFC.

La demande de brevet US 2008/230738 concerne des compositions réfrigérantes ou des compositions pour transfert de chaleur permettant d'avoir un faible GWP. Ces compositions comprennent le HFC 1225ye (1,2,3,3,3-pentafluoropropène) et au moins un autre produit (pouvant être notamment le 1234yf, le 1234ze, le 134a, le HFC 32, le HFC 125). Néanmoins ce document ne donne pas les moyens d'utiliser les fluides dans un procédé mis en œuvre en toute sécurité. Il est silencieux au regard d'un procédé de refroidissement ou de chauffage, ou d'un procédé de protection contre les risques d'incendies ou d'explosion. Toutefois, les composés oléfiniques ont tendance à être plus inflammables que les composés saturés.

Il existe donc un réel besoin d'obtenir et d'utiliser des fluides de transfert de chaleur moins inflammables que ceux de l'état de la technique, sans dégrader le GWP des fluides de transfert de chaleur.

En outre, il existe un besoin d'obtenir et d'utiliser des fluides de transfert de chaleur présentant un GWP plus faible que celui des fluides de transfert de chaleur de l'état de la technique, sans augmenter l'inflammabilité des fluides de transfert de chaleur.

### RESUME DE L'INVENTION

L'invention concerne en premier lieu un procédé de refroidissement ou de chauffage d'un fluide ou d'un corps au moyen d'un circuit de compression de vapeur contenant un fluide de transfert de chaleur, ledit circuit étant au moins partiellement contenu dans une enceinte, et l'humidité relative de l'air dans l'enceinte étant inférieure ou égale à une valeur seuil H₁ qui est inférieure à 40 %, l'inflammabilité du fluide de transfert de chaleur à l'humidité relative H₁ étant inférieure à l'inflammabilité du fluide de transfert de chaleur à 50 % d'humidité relative.

Selon l'invention, H₁ présente une valeur de préférence inférieure ou égale à 35 %, de préférence inférieure ou égale à 30 %, de préférence inférieure ou égale à 25 %, de préférence inférieure ou égale à 20 %, de préférence inférieure ou égale à 15 %, de préférence inférieure ou égale à 10 %, de préférence inférieure ou égale à 5 %.

Selon un mode de réalisation, l'humidité relative de l'air dans l'enceinte est maintenue à une valeur inférieure ou égale à H₁ par déshumidification de l'air de l'enceinte, de préférence par condensation de la vapeur d'eau dans l'air de l'enceinte ou par mise en contact de l'air de l'enceinte avec un agent déshydratant.

Selon un mode de réalisation :
- le fluide de transfert de chaleur est non inflammable à l'humidité relative H₁ et est inflammable à 50 % d'humidité relative ; ou
- le fluide de transfert de chaleur est inflammable à l'humidité relative H₁ et est inflammable à 50 % d'humidité relative, et la limite inférieure d'inflammabilité du fluide de transfert de chaleur à l'humidité relative H₁ est supérieure à la limite inférieure d'inflammabilité du fluide de transfert de chaleur à 50 % d'humidité relative ; ou
- le fluide de transfert de chaleur à l'humidité relative H₁ appartient à une classe d'inflammabilité inférieure à celle du fluide de transfert de chaleur à 50 % d'humidité relative.

Selon l'invention :
- le fluide de transfert de chaleur comprend au moins une fluorooléfine de formule XCF_{z}R_{3-z}, dans laquelle X est un radical alkyle insaturé en C₂, C₃ ou C₄, substitué ou non, chaque R est indépendamment Cl, F, Br, I ou H et z est un entier de 1 à 3 ;
- le fluide de transfert de chaleur comprend en outre au moins un autre composé de transfert de chaleur, de préférence choisi parmi les hydrocarbures, les hydrochlorofluorocarbures, les hydrofluorocarbures, les fluoroéthers et les éthers d'hydrocarbures, et de manière plus particulièrement préférée choisi parmi les hydrochlorofluorocarbures, les hydrofluorocarbures et les fluoroéthers ; et
- le fluide de transfert de chaleur est de préférence choisi parmi :
   ▪ un mélange de 1,3,3,3-tétrafluoropropène et de 2,3,3,3-tétrafluoropropène, dans un rapport massique compris de préférence entre 5:95 et 99:1, de manière plus particulièrement préférée entre 20:80 et 99:1 et de manière tout particulièrement préférée entre 60:40 et 99:1, le 1,3,3,3-tétrafluoropropène étant de préférence de forme E ;
   ▪ un mélange de 2,3,3,3-tétrafluoropropène et de 1,1,1,2-tétrafluoroéthane, dans un rapport massique compris de préférence entre 50:50 et 99:1, de manière plus particulièrement préférée entre 65:35 et 92:8 et de manière tout particulièrement préférée entre 74:26 et 91:9 ;
   ▪ un mélange de 1,3,3,3-tétrafluoropropène et de 1,1,1,2-tétrafluoroéthane, dans un rapport massique compris de préférence entre 50:50 et 99:1, de manière plus particulièrement préférée entre 65:35 et 98:2 et de manière tout particulièrement préférée entre 74:26 et 98:2, le 1,3,3,3-tétrafluoropropène étant de préférence de forme E ;
   ▪ un mélange de 2,3,3,3-tétrafluoropropène, de 1,1,1,2-tétrafluoroéthane et de difluorométhane, dans un rapport massique qui est de préférence de 2-80:2-80:2-60 et qui est de manière plus particulièrement préférée de 2-80:2-80:2-12 ou de 2-80:2-80:15-30 ou de 2-53:2-53:45-60 ;
   ▪ un mélange de 1,3,3,3-tétrafluoropropène, de 1,1,1,2-tétrafluoroéthane et de difluorométhane, dans un rapport massique qui est de préférence de 1-90:1-90:1-65, le 1,3,3,3-tétrafluoropropène étant de préférence de forme E ;
   ▪ un mélange de 1,3,3,3-tétrafluoropropène, de 2,3,3,3-tétrafluoropropène et de difluorométhane, dans un rapport massique qui est de préférence de 1-90:1-90:1-65, le 1,3,3,3-tétrafluoropropène étant de préférence de forme E ;
   ▪ un mélange de 1,3,3,3-tétrafluoropropène, de 2,3,3,3-tétrafluoropropène et de 1,1,1,2-tétrafluoroéthane, dans un rapport massique qui est de préférence de 1-80:2-93:6-21 ;
   ▪ le 3,3,3-trifluoropropène en mélange avec du 2,3,3,3-tétrafluoropropène ou en mélange avec du 1,3,3,3-tétrafluoropropène, de préférence de forme E, ou en mélange avec du 1,1,1,2-tétrafluoroéthane ou en mélange avec du 1,1,1,2-tétrafluoroéthane et du difluorométhane ou en mélange avec du 2,3,3,3-tétrafluoropropène et du 1,1,1,2-tétrafluoroéthane ou en mélange avec du 1,1,1,2-tétrafluoroéthane et du 1,3,3,3-tétrafluoropropène, de préférence de forme E ;
   ▪ un mélange de 2,3,3,3-tétrafluoropropène et de pentafluoroéthane, dans un rapport massique compris de préférence entre 70:30 et 85:15 ;
   ▪ un mélange de 1,3,3,3-tétrafluoropropène et de pentafluoroéthane, dans un rapport massique compris de préférence entre 80:20 et 98:2, le 1,3,3,3-tétrafluoropropène étant de préférence de forme E ;
   ▪ un mélange de 2,3,3,3-tétrafluoropropène, de difluorométhane et de pentafluoroéthane, dans un rapport massique qui est de préférence de 30-90:5-50:2-20, de manière plus particulièrement préférée de 45-80:15-35:5-20 et idéalement de 55-74:18-25:8-20 ;
   ▪ un mélange de 1,3,3,3-tétrafluoropropène, de difluorométhane et de pentafluoroéthane, dans un rapport massique qui est de préférence de 30-90:5-50:2-20, de manière plus particulièrement préférée de 40-62:30-40:8-20 ou de 60-90:5-20:5-20 ou de 40-70:25-40:5-20, le 1,3,3,3-tétrafluoropropène étant de préférence de forme E ;
   ▪ un mélange de 1,3,3,3-tétrafluoropropène, de 1,1,1,2-tétrafluoroéthane, de difluorométhane et de pentafluoroéthane, dans un rapport massique qui est de préférence de 15-55:15-55:15-35:15-35, le 1,3,3,3-tétrafluoropropène étant de préférence de forme E ;
   ▪ un mélange de 2,3,3,3-tétrafluoropropène, de 1,1,1,2-tétrafluoroéthane, de difluorométhane et de pentafluoroéthane, dans un rapport massique qui est de préférence de 15-55:15-55:15-35:15-35.

Selon un mode de réalisation, le circuit de compression de vapeur comprend une composition de transfert de chaleur, la composition de transfert de chaleur comprenant le fluide de transfert de chaleur et un ou plusieurs additifs choisis parmi les lubrifiants, les stabilisants, les tensioactifs, les agents traceurs, les agents fluorescents, les agents odorants et les agents de solubilisation.

L'invention a également pour objet une installation de refroidissement ou de chauffage comprenant un circuit de compression de vapeur contenant un fluide de transfert de chaleur, ledit circuit étant au moins partiellement contenu dans une enceinte, dans laquelle l'humidité relative de l'air dans l'enceinte est inférieure ou égale à une valeur H₁ qui est inférieure à 40 % et l'inflammabilité du fluide de transfert de chaleur à l'humidité relative H₁ est inférieure à l'inflammabilité du fluide de transfert de chaleur à 50 % d'humidité relative.

Selon l'invention, H₁ présente une valeur de préférence inférieure ou égale à 35 %, de préférence inférieure ou égale à 30 %, de préférence inférieure ou égale à 25 %, de préférence inférieure ou égale à 20 %, de préférence inférieure ou égale à 15 %, de préférence inférieure ou égale à 10 %, de préférence inférieure ou égale à 5 %.

Selon un mode de réalisation, l'installation comprend des moyens de déshumidification de l'air de l'enceinte, de préférence des moyens de condensation de la vapeur d'eau dans l'air de l'enceinte ou des moyens de mise en contact de l'air de l'enceinte avec un agent déshydratant.

Selon un mode de réalisation :
- le fluide de transfert de chaleur est non inflammable à l'humidité relative H₁ et est inflammable à 50 % d'humidité relative ; ou
- le fluide de transfert de chaleur est inflammable à l'humidité relative H₁ et est inflammable à 50 % d'humidité relative et la limite inférieure d'inflammabilité du fluide de transfert de chaleur à l'humidité relative H₁ est supérieure à la limite inférieure d'inflammabilité du fluide de transfert de chaleur à 50 % d'humidité relative ; ou
- le fluide de transfert de chaleur à l'humidité relative H₁ appartient à une classe d'inflammabilité inférieure à celle du fluide de transfert de chaleur à 50 % d'humidité relative.

Selon un mode de réalisation :
- le fluide de transfert de chaleur comprend au moins une fluorooléfine de formule XCF_{z}R_{3-z}, dans laquelle X est un radical alkyle insaturé en C₂, C₃ ou C₄, substitué ou non, chaque R est indépendamment Cl, F, Br, I ou H et z est un entier de 1 à 3 ;
- le fluide de transfert de chaleur comprend en outre au moins un autre composé de transfert de chaleur, de préférence choisi parmi les hydrocarbures, les hydrochlorofluorocarbures, les hydrofluorocarbures, les fluoroéthers, les éthers d'hydrocarbures et l'ammoniac, et de manière plus particulièrement préférée choisi parmi les hydrochlorofluorocarbures, les hydrofluorocarbures et les fluoroéthers ; et
- le fluide de transfert de chaleur est de préférence choisi parmi :
   ▪ un mélange de 1,3,3,3-tétrafluoropropène et de 2,3,3,3-tétrafluoropropène, dans un rapport massique compris de préférence entre 5:95 et 99:1, de manière plus particulièrement préférée entre 20:80 et 99:1 et de manière tout particulièrement préférée entre 60:40 et 99:1, le 1,3,3,3-tétrafluoropropène étant de préférence de forme E ;
   ▪ un mélange de 2,3,3,3-tétrafluoropropène et de 1,1,1,2-tétrafluoroéthane, dans un rapport massique compris de préférence entre 50:50 et 99:1, de manière plus particulièrement préférée entre 65:35 et 92:8 et de manière tout particulièrement préférée entre 74:26 et 91:9 ;
   ▪ un mélange de 1,3,3,3-tétrafluoropropène et de 1,1,1,2-tétrafluoroéthane, dans un rapport massique compris de préférence entre 50:50 et 99:1, de manière plus particulièrement préférée entre 65:35 et 98:2 et de manière tout particulièrement préférée entre 74:26 et 98:2, le 1,3,3,3-tétrafluoropropène étant de préférence de forme E ;
   ▪ un mélange de 2,3,3,3-tétrafluoropropène, de 1,1,1,2-tétrafluoroéthane et de difluorométhane, dans un rapport massique qui est de préférence de 2-80:2-80:2-60 et qui est de manière plus particulièrement préférée de 2-80:2-80:2-12 ou de 2-80:2-80:15-30 ou de 2-53:2-53:45-60 ;
   ▪ un mélange de 1,3,3,3-tétrafluoropropène, de 1,1,1,2-tétrafluoroéthane et de difluorométhane, dans un rapport massique qui est de préférence de 1-90:1-90:1-65, le 1,3,3,3-tétrafluoropropène étant de préférence de forme E ;
   ▪ un mélange de 1,3,3,3-tétrafluoropropène, de 2,3,3,3-tétrafluoropropène et de difluorométhane, dans un rapport massique qui est de préférence de 1-90:1-90:1-65, le 1,3,3,3-tétrafluoropropène étant de préférence de forme E ;
   ▪ un mélange de 1,3,3,3-tétrafluoropropène, de 2,3,3,3-tétrafluoropropène et de 1,1,1,2-tétrafluoroéthane, dans un rapport massique qui est de préférence de 1-80:2-93:6-21 ;
   ▪ le 3,3,3-trifluoropropène en mélange avec du 2,3,3,3-tétrafluoropropène ou en mélange avec du 1,3,3,3-tétrafluoropropène, de préférence de forme E, ou en mélange avec du 1,1,1,2-tétrafluoroéthane ou en mélange avec du 1,1,1,2-tétrafluoroéthane et du difluorométhane ou en mélange avec du 2,3,3,3-tétrafluoropropène et du 1,1,1,2-tétrafluoroéthane ou en mélange avec du 1,1,1,2-tétrafluoroéthane et du 1,3,3,3-tétrafluoropropène, de préférence de forme E ;
   ▪
   ▪ un mélange de 2,3,3,3-tétrafluoropropène et de pentafluoroéthane, dans un rapport massique compris de préférence entre 70:30 et 85:15 ;
   ▪ un mélange de 1,3,3,3-tétrafluoropropène et de pentafluoroéthane, dans un rapport massique compris de préférence entre 80:20 et 98:2, le 1,3,3,3-tétrafluoropropène étant de préférence de forme E ;
   ▪ un mélange de 2,3,3,3-tétrafluoropropène, de difluorométhane et de pentafluoroéthane, dans un rapport massique qui est de préférence de 30-90:5-50:2-20, de manière plus particulièrement préférée de 45-80:15-35:5-20 et idéalement de 55-74:18-25:8-20 ;
   ▪ un mélange de 1,3,3,3-tétrafluoropropène, de difluorométhane et de pentafluoroéthane, dans un rapport massique qui est de préférence de 30-90:5-50:2-20, de manière plus particulièrement préférée de 40-62:30-40:8-20 ou de 60-90:5-20:5-20 ou de 40-70:25-40:5-20, le 1,3,3,3-tétrafluoropropène étant de préférence de forme E ;
   ▪ un mélange de 1,3,3,3-tétrafluoropropène, de 1,1,1,2-tétrafluoroéthane, de difluorométhane et de pentafluoroéthane, dans un rapport massique qui est de préférence de 15-55:15-55:15-35:15-35, le 1,3,3,3-tétrafluoropropène étant de préférence de forme E ;
   ▪ un mélange de 2,3,3,3-tétrafluoropropène, de 1,1,1,2-tétrafluoroéthane, de difluorométhane et de pentafluoroéthane, dans un rapport massique qui est de préférence de 15-55:15-55:15-35:15-35.

Selon un mode de réalisation, le circuit de compression de vapeur comprend une composition de transfert de chaleur, la composition de transfert de chaleur comprenant le fluide de transfert de chaleur et un ou plusieurs additifs choisis parmi les lubrifiants, les stabilisants, les tensioactifs, les agents traceurs, les agents fluorescents, les agents odorants et les agents de solubilisation.

Selon un mode de réalisation, l'installation est choisie parmi les installations mobiles ou stationnaires de chauffage par pompe à chaleur, de climatisation, de réfrigération et de congélation.

L'invention a également pour objet un procédé de protection contre les risques d'incendie ou d'explosion dans une enceinte contenant au moins partiellement un circuit de compression de vapeur contenant un fluide de transfert de chaleur, ledit procédé comprenant le maintien de l'humidité relative de l'air dans l'enceinte à une valeur inférieure ou égale à une valeur seuil H₁ qui est inférieure à 40 %, l'inflammabilité du fluide de transfert de chaleur à l'humidité relative H₁ étant inférieure à l'inflammabilité du fluide de transfert de chaleur à 50 % d'humidité relative.

Selon un mode de réalisation :
- le fluide de transfert de chaleur est non inflammable à l'humidité relative H₁ et est inflammable à 50 % d'humidité relative ; ou
- le fluide de transfert de chaleur est inflammable à l'humidité relative H₁ et est inflammable à 50 % d'humidité relative et la limite inférieure d'inflammabilité du fluide de transfert de chaleur à l'humidité relative H₁ est supérieure à la limite inférieure d'inflammabilité du fluide de transfert de chaleur à 50 % d'humidité relative ; ou
- le fluide de transfert de chaleur à l'humidité relative H₁ appartient à une classe d'inflammabilité inférieure à celle du fluide de transfert de chaleur à 50 % d'humidité relative.

Selon un mode de réalisation, le maintien de l'humidité relative de l'air dans l'enceinte à une valeur inférieure ou égale à H₁ est effectué par déshumidification de l'air de l'enceinte, de préférence par condensation de la vapeur d'eau dans l'air de l'enceinte ou par mise en contact de l'air de l'enceinte avec un agent déshydratant.

Selon l'invention, H₁ présente une valeur inférieure ou égale à 35 %, de préférence inférieure ou égale à 30 %, de préférence inférieure ou égale à 25 %, de préférence inférieure ou égale à 20 %, de préférence inférieure ou égale à 15 %, de préférence inférieure ou égale à 10 %, de préférence inférieure ou égale à 5 %.

Selon l'invention :
- le fluide de transfert de chaleur comprend au moins une fluorooléfine de formule XCF_{z}R_{3-z}, dans laquelle X est un radical alkyle insaturé en C₂, C₃ ou C₄, substitué ou non, chaque R est indépendamment Cl, F, Br, I ou H et z est un entier de 1 à 3 ;
- le fluide de transfert de chaleur comprend en outre au moins un autre composé de transfert de chaleur, de préférence choisi parmi les hydrocarbures, les hydrochlorofluorocarbures, les hydrofluorocarbures, les fluoroéthers et les éthers d'hydrocarbures, et de manière plus particulièrement préférée choisi parmi les hydrochlorofluorocarbures, les hydrofluorocarbures et les fluoroéthers ; et
- le fluide de transfert de chaleur est de préférence choisi parmi :
   ▪ un mélange de 1,3,3,3-tétrafluoropropène et de 2,3,3,3-tétrafluoropropène, dans un rapport massique compris de préférence entre 5:95 et 99:1, de manière plus particulièrement préférée entre 20:80 et 99:1 et de manière tout particulièrement préférée entre 60:40 et 99:1, le 1,3,3,3-tétrafluoropropène étant de préférence de forme E ;
   ▪ un mélange de 2,3,3,3-tétrafluoropropène et de 1,1,1,2-tétrafluoroéthane, dans un rapport massique compris de préférence entre 50:50 et 99:1, de manière plus particulièrement préférée entre 65:35 et 92:8 et de manière tout particulièrement préférée entre 74:26 et 91:9 ;
   ▪ un mélange de 1,3,3,3-tétrafluoropropène et de 1,1,1,2-tétrafluoroéthane, dans un rapport massique compris de préférence entre 50:50 et 99:1, de manière plus particulièrement préférée entre 65:35 et 98:2 et de manière tout particulièrement préférée entre 74:26 et 98:2, le 1,3,3,3-tétrafluoropropène étant de préférence de forme E ;
   ▪ un mélange de 2,3,3,3-tétrafluoropropène, de 1,1,1,2-tétrafluoroéthane et de difluorométhane, dans un rapport massique qui est de préférence de 2-80:2-80:2-60 et qui est de manière plus particulièrement préférée de 2-80:2-80:2-12 ou de 2-80:2-80:15-30 ou de 2-53:2-53:45-60 ;
   ▪ un mélange de 1,3,3,3-tétrafluoropropène, de 1,1,1,2-tétrafluoroéthane et de difluorométhane, dans un rapport massique qui est de préférence de 1-90:1-90:1-65, le 1,3,3,3-tétrafluoropropène étant de préférence de forme E ;
   ▪ un mélange de 1,3,3,3-tétrafluoropropène, de 2,3,3,3-tétrafluoropropène et de difluorométhane, dans un rapport massique qui est de préférence de 1-90:1-90:1-65, le 1,3,3,3-tétrafluoropropène étant de préférence de forme E ;
   ▪ un mélange de 1,3,3,3-tétrafluoropropène, de 2,3,3,3-tétrafluoropropène et de 1,1,1,2-tétrafluoroéthane, dans un rapport massique qui est de préférence de 1-80:2-93:6-21 ;
   ▪ le 3,3,3-trifluoropropène en mélange avec du 2,3,3,3-tétrafluoropropène ou en mélange avec du 1,3,3,3-tétrafluoropropène, de préférence de forme E, ou en mélange avec du 1,1,1,2-tétrafluoroéthane ou en mélange avec du 1,1,1,2-tétrafluoroéthane et du difluorométhane ou en mélange avec du 2,3,3,3-tétrafluoropropène et du 1,1,1,2-tétrafluoroéthane ou en mélange avec du 1,1,1,2-tétrafluoroéthane et du 1,3,3,3-tétrafluoropropène, de préférence de forme E ;
   ▪ un mélange de 2,3,3,3-tétrafluoropropène et de pentafluoroéthane, dans un rapport massique compris de préférence entre 70:30 et 85:15 ;
   ▪ un mélange de 1,3,3,3-tétrafluoropropène et de pentafluoroéthane, dans un rapport massique compris de préférence entre 80:20 et 98:2, le 1,3,3,3-tétrafluoropropène étant de préférence de forme E ;
   ▪ un mélange de 2,3,3,3-tétrafluoropropène, de difluorométhane et de pentafluoroéthane, dans un rapport massique qui est de préférence de 30-90:5-50:2-20, de manière plus particulièrement préférée de 45-80:15-35:5-20 et idéalement de 55-74:18-25:8-20 ;
   ▪ un mélange de 1,3,3,3-tétrafluoropropène, de difluorométhane et de pentafluoroéthane, dans un rapport massique qui est de préférence de 30-90:5-50:2-20, de manière plus particulièrement préférée de 40-62:30-40:8-20 ou de 60-90:5-20:5-20 ou de 40-70:25-40:5-20, le 1,3,3,3-tétrafluoropropène étant de préférence de forme E ;
   ▪ un mélange de 1,3,3,3-tétrafluoropropène, de 1,1,1,2-tétrafluoroéthane, de difluorométhane et de pentafluoroéthane, dans un rapport massique qui est de préférence de 15-55:15-55:15-35:15-35, le 1,3,3,3-tétrafluoropropène étant de préférence de forme E ;
   ▪ un mélange de 2,3,3,3-tétrafluoropropène, de 1,1,1,2-tétrafluoroéthane, de difluorométhane et de pentafluoroéthane, dans un rapport massique qui est de préférence de 15-55:15-55:15-35:15-35.

Selon un mode de réalisation, le circuit de compression de vapeur comprend une composition de transfert de chaleur, la composition de transfert de chaleur comprenant le fluide de transfert de chaleur et un ou plusieurs additifs choisis parmi les lubrifiants, les stabilisants, les tensioactifs, les agents traceurs, les agents fluorescents, les agents odorants et les agents de solubilisation.

La présente invention permet de surmonter les inconvénients de l'état de la technique.

Cela est accompli grâce à la variabilité de l'inflammabilité des composés de transfert de chaleur en fonction de l'humidité relative de l'air, et plus précisément grâce à la diminution de l'inflammabilité de certains de ces composés (et notamment de certaines fluorooléfines telles que les tétrafluoropropènes) en présence d'un faible degré d'humidité dans l'air.

Le procédé de l'invention rend ainsi possible de réduire l'inflammabilité d'un fluide de transfert de chaleur (en conditions d'utilisation) en réduisant l'humidité relative de l'air environnant (et ce sans augmenter le GWP du fluide de transfert de chaleur).

### BREVE DESCRIPTION DES FIGURES

La **figure 1** représente la proportion massique minimale de HFC-134a dans un mélange binaire HFO-1234yf / HFC-134a (en ordonnée) nécessaire pour que le mélange soit non inflammable, en fonction de l'humidité relative de l'air (en abscisse).
La **figure 2** représente la proportion massique minimale de HFC-134a dans un mélange binaire HFC-134a / HFC-32 (en ordonnée) nécessaire pour que le mélange soit non inflammable, en fonction de l'humidité relative de l'air (en abscisse).
La **figure 3** est un diagramme illustrant la proportion de HFC-134a minimale nécessaire dans un mélange ternaire HFO-1234yf / HFC-134a / HFC-32 pour que le mélange soit non inflammable, et ce en fonction de l'humidité relative de l'air. La pointe haute du triangle correspond à 100 % de HFC-134a, la pointe en bas en gauche correspond à 100 % de HFC-1234yf et la pointe en bas à droite correspond à 100 % de HFC-32. Les limites de non inflammabilité sont indiquées par des points sur le diagramme, le sigle « HR » signifiant « pourcentage d'humidité relative ».
La **figure 4** est un diagramme illustrant la variation de l'inflammabilité de mélanges ternaires HFO-1234ze / HFC-134a / HFC-32 en fonction de l'humidité relative.
La **figure 5** est un diagramme illustrant la variation de l'inflammabilité de mélanges ternaires HFO-1234yf / HFO-1234ze / HFC-134a en fonction de l'humidité relative.
La **figure 6** est un diagramme illustrant la variation de l'inflammabilité de mélanges ternaires HFO-1234yf / HFC-134a / HFC-32 en fonction de l'humidité relative (ce diagramme présente de manière différente les résultats qui sont illustrés à la **figure 3**).

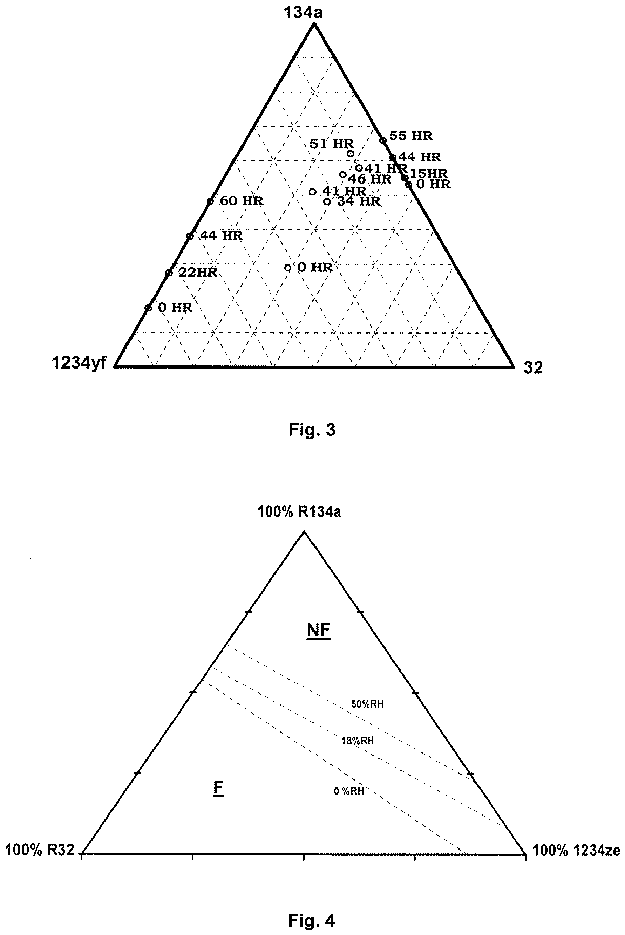

Dans les **figures 4** à **6**, la zone F correspond aux mélanges inflammables, la zone NF correspond aux mélanges non-inflammables. Les lignes en pointillés correspondent à la frontière entre les zones F et NF pour une valeur d'humidité relative donnée, qui est indiquée. Une humidité relative de 0 % correspond à 0 g d'eau par kg d'air sec, une humidité relative de 18 % correspond à 3,2 g d'eau par kg d'air sec, une humidité relative de 30 % correspond à 5,25 g d'eau par kg d'air sec, et une humidité relative de 50 % correspond à 8,8 g d'eau par kg d'air sec. La zone grisée entre les zones F et NF correspond aux mélanges qui sont inflammables à une humidité relative supérieure à H et non-inflammables à une humidité relative inférieure à H, H étant compris entre 0 et 50 %.

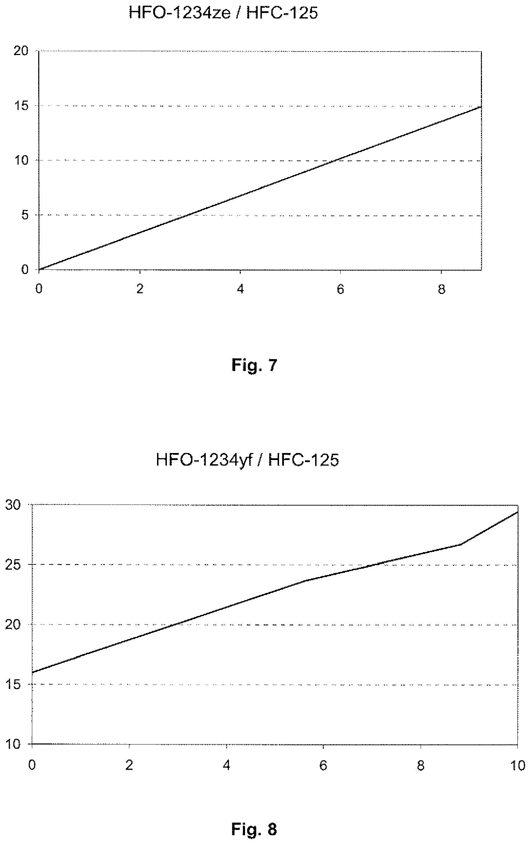

La **figure 7** représente la proportion massique minimale de HFC-125 dans un mélange binaire HFO-1234ze / HFC-125 (en ordonnée) nécessaire pour que le mélange soit non inflammable, en fonction de l'humidité de l'air (en abscisse) exprimée en g d'eau par kg d'air sec.
La **figure 8** représente la proportion massique minimale de HFC-125 dans un mélange binaire HFO-1234yf / HFC-125 (en ordonnée) nécessaire pour que le mélange soit non inflammable, en fonction de l'humidité de l'air (en abscisse) exprimée en g d'eau par kg d'air sec.

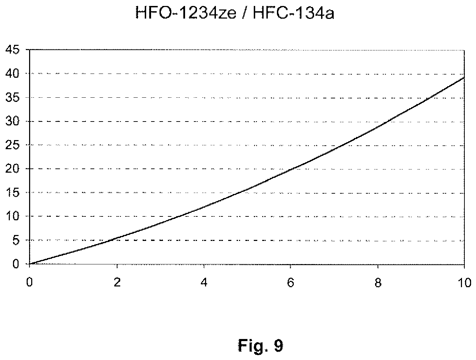

La **figure 9** représente la proportion massique minimale de HFC-134a dans un mélange binaire HFO-1234ze / HFC-134a (en ordonnée) nécessaire pour que le mélange soit non inflammable, en fonction de l'humidité de l'air (en abscisse) exprimée en g d'eau par kg d'air sec.

### DESCRIPTION DE MODES DE REALISATION DE L'INVENTION

L'invention est maintenant décrite plus en détail et de façon non limitative dans la description qui suit.

### Définitions

Par « composé de transfert de chaleur », respectivement « fluide de transfert de chaleur » (ou fluide frigorigène), on entend un composé, respectivement un fluide, susceptible d'absorber de la chaleur en s'évaporant à basse température et basse pression et de rejeter de la chaleur en se condensant à haute température et haute pression, dans un circuit de compression de vapeur. Un fluide de transfert de chaleur peut comprendre un seul, deux, trois ou plus de trois composés de transfert de chaleur.

Par « composition de transfert de chaleur » on entend une composition comprenant un fluide de transfert de chaleur et éventuellement un ou plusieurs additifs qui ne sont pas des composés de transfert de chaleur pour l'application envisagée.

L'humidité relative (ou degré d'hygrométrie) est le rapport de la pression partielle de vapeur d'eau contenue dans l'air sur la pression de vapeur saturante (ou tension de vapeur) de l'eau dans l'air. Dans le cadre de la présente demande, l'humidité relative est toujours considérée à une température de référence de 23°C. Par conséquent, si l'air est à une température T différente de 23°C, on mesure d'abord l'humidité relative à la température T au moyen d'une sonde d'humidité relative (de type résistif, capacitif ou selfique) ou hygrostat puis on utilise un diagramme ou une table de conversion pour en déduire l'humidité relative correspondant à la même teneur en eau à une température de 23°C. Ce résultat est « l'humidité relative » au sens de la présente demande. En effet, le paramètre physiquement pertinent du point de vue de l'inflammabilité est la quantité absolue d'eau dans l'air sec : celle-ci peut être mesurée au moyen de l'humidité relative, à condition de toujours utiliser une même température de référence.

Dans le cadre de la présente demande, l'inflammabilité est définie en référence à la norme ASHRAE 34-2007 modifiée. Plus précisément, l'inflammabilité d'un fluide de transfert de chaleur à une valeur d'humidité relative H est déterminée selon le test figurant dans la norme ASHRAE 34-2007 (qui renvoie à la norme ASTM E681 pour ce qui est de l'appareillage utilisé), avec pour seules exceptions par rapport à la norme ASHRAE 34-2007 que :
- la température du test est de 60°C (et non de 100°C comme indiqué dans la norme ASHRAE 34-2007) ; et
- l'air utilisé dans le test présente une humidité relative H qui n'est pas nécessairement égale à 50 % (alors que dans la norme ASHRAE 34-2007, l'humidité relative de l'air pour le test est toujours fixée à 50 %).

Les différents fluides de transfert de chaleur testés sont qualifiés d'inflammables ou de non inflammables en tant que tels, pour une valeur d'humidité relative H donnée, selon les critères définis dans la norme ASHRAE 34-2007.

En outre, pour les fluides de transfert de chaleur qui sont qualifiés d'inflammables à une valeur d'humidité relative H donnée, on définit une limite inférieure d'inflammabilité qui peut être donnée par exemple en kg/m³ ou en %vol. Cette limite inférieure d'inflammabilité correspond à la quantité minimale de fluide de transfert de chaleur par unité de volume d'air à partir de laquelle le fluide de transfert de chaleur produit une inflammation dans le test de la norme ASHRAE 34-2007 modifié, décrit ci-dessus.

Dans le cadre de la présente demande, on considère qu'un fluide de transfert de chaleur A présente une inflammabilité à une humidité relative H qui est inférieure à l'inflammabilité d'un fluide de transfert de chaleur B à la même humidité relative H si :
1) le fluide de transfert de chaleur A est non inflammable à l'humidité relative H alors que le fluide de transfert de chaleur B est inflammable à l'humidité relative H ; ou
2) le fluide de transfert de chaleur A et le fluide de transfert de chaleur B sont tous deux inflammables à l'humidité relative H, et la limite inférieure d'inflammabilité du fluide de transfert de chaleur A à l'humidité relative H est supérieure à la limite inférieure d'inflammabilité du fluide de transfert de chaleur B à l'humidité relative H ; ou
3) le fluide de transfert de chaleur A appartient à une classe d'inflammabilité inférieure à celle du fluide de transfert de chaleur B.

Si aucun des deux fluides A et B n'est considéré comme présentant une inflammabilité inférieure à l'autre (au sens de la définition ci-dessus), alors on considère que les deux fluides présentent une inflammabilité identique.

En ce qui concerne la situation 3) évoquée ci-dessus, la classification utilisée est soit celle de la norme ASHRAE 34-2007 (définissant les classes d'inflammabilité A1/B1, A2/B2 et A3/B3), soit celle de la norme ASHRAE 34-2007 modifiée, dans laquelle la modification de la norme consiste en une modification de la définition de la classe A2 (respectivement de la classe B2) de sorte à créer une nouvelle classe A2L (respectivement une nouvelle classe B2L), de la façon suivante :
- les classes A2 et A2L (respectivement B2 et B2L) sont toutes deux caractérisées par (1) la présence d'une propagation de flamme à 60°C et à 101,3 kPa, (2) une limite inférieure d'inflammabilité supérieure à 3,5 % en volume et (3) une chaleur de combustion inférieure à 19000 kJ/kg ;
- la classe A2L (respectivement B2L) est caractérisée par une vitesse de combustion maximale inférieure ou égale à 10 cm/s à 23°C et 101,3 kPa tandis que la classe A2 (respectivement B2) est caractérisée par une vitesse de combustion maximale supérieure à 10 cm/s à 23°C et 101,3 kPa.

Les méthodes de détermination des paramètres ci-dessus sont telles que décrites dans la norme ASHRAE 34-2007.

Par « classe d'inflammabilité inférieure » on entend donc la classe A1 par rapport à la classe A2L ou A2 ou A3, la classe A2L par rapport à la classe A2 ou A3, la classe A2 par rapport à la classe A3, la classe B1 par rapport à la classe B2L ou B2 ou B3, la classe B2L par rapport à la classe B2 ou B3 ou enfin la classe B2 par rapport à la classe B3.

La situation 3) ci-dessus correspond donc aux cas suivants :
- le fluide de transfert de chaleur A appartient à la classe A1 et le fluide de transfert de chaleur B appartient à la classe A2L ou A2 ou A3 ;
- le fluide de transfert de chaleur A appartient à la classe A2L et le fluide de transfert de chaleur B appartient à la classe A2 ou A3 ;
- le fluide de transfert de chaleur A appartient à la classe A2 et le fluide de transfert de chaleur B appartient à la classe A3 ;
- le fluide de transfert de chaleur A appartient à la classe B1 et le fluide de transfert de chaleur B appartient à la classe B2L ou B2 ou B3 ;
- le fluide de transfert de chaleur A appartient à la classe B2L et le fluide de transfert de chaleur B appartient à la classe B2 ou B3 ;
- le fluide de transfert de chaleur A appartient à la classe B2 et le fluide de transfert de chaleur B appartient à la classe B3.

Le critère de comparaison de l'inflammabilité en fonction de la classification permet notamment de différencier deux fluides de transfert de chaleur A et B qui sont des mélanges de composés de transfert de chaleur, et dont l'inflammabilité intrinsèque est identique (par exemple ces deux fluides de transfert étant non inflammables en tant que tels) mais qui sont tels que l'inflammabilité de la composition WCF et / ou de la composition WCFF (gaz de fuite) issue de ces deux fluides de transfert de chaleur est différente. Les compositions WCF et WCFF d'un fluide de transfert de chaleur comprenant plusieurs composés sont définies dans la norme ASHRAE 34-2007.

Selon un mode de réalisation, le fait qu'un fluide de transfert de chaleur A présente une inflammabilité à une humidité relative H qui est inférieure à celle d'un fluide de transfert de chaleur B à la même humidité relative H signifie nécessairement que les fluides A et B sont dans la situation 1) ci-dessus.

Selon un mode de réalisation, le fait qu'un fluide de transfert de chaleur A présente une inflammabilité à une humidité relative H qui est inférieure à celle d'un fluide de transfert de chaleur B à la même humidité relative H signifie nécessairement que les fluides A et B sont dans la situation 2) ci-dessus.

Selon un mode de réalisation, le fait qu'un fluide de transfert de chaleur A présente une inflammabilité à une humidité relative H qui est inférieure à celle d'un fluide de transfert de chaleur B à la même humidité relative H signifie nécessairement que les fluides A et B sont dans la situation 3) ci-dessus.

Dans le cadre de la présente demande, un fluide de transfert de chaleur A présente une inflammabilité à une humidité relative H₁ qui est inférieure à son inflammabilité à une humidité relative H₂ si :
4) le fluide de transfert de chaleur A est non inflammable à l'humidité relative H₁ alors qu'il est inflammable à l'humidité relative H₂ ; ou
5) le fluide de transfert de chaleur A est inflammable à l'humidité relative H₁ et à l'humidité relative H₂, et la limite inférieure d'inflammabilité du fluide de transfert de chaleur A à l'humidité relative H₁ est supérieure à la limite inférieure d'inflammabilité du fluide de transfert de chaleur A à l'humidité relative H₂ ; ou
6) le fluide de transfert de chaleur A à l'humidité relative H₁ appartient à une classe d'inflammabilité inférieure à celle du transfert de chaleur A considéré à l'humidité relative H₂.

Si le fluide A ne présente pas une inflammabilité inférieure à une des deux humidités relatives par rapport à l'autre (au sens de la définition ci-dessus), alors on considère que le fluide présente une inflammabilité identique aux deux humidités relatives en question.

En ce qui concerne la définition des classes d'inflammabilité et leur comparaison, dans la situation 6) ci-dessus, il est renvoyé à la définition figurant ci-dessus au sujet de la comparaison de l'inflammabilité de deux fluides de transfert de chaleur A et B.

Selon un mode de réalisation, le fait qu'un fluide de transfert de chaleur A présente une inflammabilité à une humidité relative H₁ qui est inférieure à son inflammabilité à une humidité relative H₂ signifie que le fluide A est dans la situation 4) ci-dessus.

Selon un mode de réalisation, le fait qu'un fluide de transfert de chaleur A présente une inflammabilité à une humidité relative H₁ qui est inférieure à son inflammabilité à une humidité relative H₂ signifie que le fluide A est dans la situation 5) ci-dessus.

Selon un mode de réalisation, le fait qu'un fluide de transfert de chaleur A présente une inflammabilité à une humidité relative H₁ qui est inférieure à son inflammabilité à une humidité relative H₂ signifie que le fluide A est dans la situation 6) ci-dessus.

Par conséquent, la notion de réduction ou diminution de l'inflammabilité, dans la présente demande, signifie un passage d'une inflammabilité initiale à une inflammabilité finale dans lequel l'inflammabilité finale est inférieure à l'inflammabilité initiale, selon les définitions qui précèdent.

Dans le cadre de la présente demande, le potentiel de réchauffement global (GWP) est défini par rapport au dioxyde de carbone et par rapport à une durée de 100 ans, selon la méthode indiquée dans « *The scientific assessment of ozone depletion, 2002, a report of the World Meteorological Association's Global Ozone Research and Monitoring Project* ».

### Mise en œuvre de l'invention

L'invention fournit en premier lieu une installation comprenant un circuit de compression de vapeur contenant un fluide de transfert de chaleur, ainsi qu'un procédé de chauffage ou de refroidissement d'un fluide ou d'un corps pouvant être mise en œuvre au moyen de ladite installation.

Le fluide ou le corps chauffé ou refroidi peut notamment être de l'air contenu dans un espace essentiellement fermé.

Le circuit de compression de vapeur contenant un fluide de transfert de chaleur comprend au moins un évaporateur, un compresseur, un condenseur et un détendeur, ainsi que des lignes de transport de fluide de transfert de chaleur entre ces éléments.

A titre de compresseur, on peut utiliser notamment un compresseur centrifuge à plusieurs étages et de préférence à deux étages ou un mini-compresseur centrifuge. Le compresseur peut être entraîné par un moteur électrique ou par une turbine à gaz (par exemple alimentée par les gaz d'échappement d'un véhicule, pour les applications mobiles) ou par engrenage.

L'installation peut comprendre un couplage du détendeur avec une turbine pour générer de l'électricité (cycle de Rankine).

L'installation peut également éventuellement comprendre au moins un circuit de fluide caloporteur utilisé pour transmettre la chaleur (avec ou sans changement d'état) entre le circuit de fluide de transfert de chaleur et le fluide ou corps à chauffer ou refroidir.

L'installation peut également éventuellement comprendre deux circuits de compression de vapeur (ou plus), contenant des fluides de transfert de chaleur identiques ou distincts. Par exemple, les circuits de compression de vapeur peuvent être couplés entre eux.

Le circuit de compression de vapeur fonctionne selon un cycle classique de compression de vapeur. Le cycle comprend le changement d'état du fluide de transfert de chaleur d'une phase liquide (ou diphasique liquide / vapeur) vers une phase vapeur à une pression relativement faible, puis la compression du fluide en phase vapeur jusqu'à une pression relativement élevée, le changement d'état (condensation) du fluide de transfert de chaleur de la phase vapeur vers la phase liquide à une pression relativement élevée, et la réduction de la pression pour recommencer le cycle.

Dans le cas d'un procédé de refroidissement, de la chaleur issue du fluide ou du corps que l'on refroidit (directement ou indirectement, *via* un fluide caloporteur) est absorbée par le fluide de transfert de chaleur, lors de l'évaporation de ce dernier, et ce à une température relativement faible par rapport à l'environnement.

Dans le cas d'un procédé de chauffage, de la chaleur est cédée (directement ou indirectement, *via* un fluide caloporteur) du fluide de transfert de chaleur, lors de la condensation de celui-ci, au fluide ou au corps que l'on chauffe, et ce à une température relativement élevée par rapport à l'environnement.

Selon l'invention, tout ou partie du circuit de compression de vapeur est contenu dans une enceinte. L'enceinte est un espace rempli d'air, essentiellement isolé de l'environnement par des parois.

L'enceinte en question peut être l'espace contenant le fluide ou corps dont le refroidissement ou le chauffage est assuré par le circuit de compression de vapeur. Dans ce cas, l'enceinte contient au moins l'évaporateur du circuit (en cas de procédé de refroidissement) ou le condenseur du circuit (en cas de procédé de chauffage).

L'enceinte peut également être distincte de l'espace contenant le fluide ou corps dont le refroidissement ou le chauffage est recherché. Dans ce cas, l'enceinte peut être une salle des machines, c'est-à-dire un espace spécifiquement dédié à contenir l'installation selon l'invention.

L'enceinte n'est pas nécessairement totalement fermée de manière étanche à l'air. Elle est généralement pourvue notamment de moyens de ventilation assurant le renouvellement de l'air dans l'enceinte.

L'installation de refroidissement ou de chauffage selon l'invention peut être une installation mobile ou stationnaire, de préférence stationnaire.

Il peut s'agir notamment d'une installation de pompe à chaleur, auquel cas le fluide ou corps que l'on chauffe (généralement de l'air et éventuellement un ou plusieurs produits, objets ou organismes) est situé dans un local ou un habitacle de véhicule (pour une installation mobile). Il peut s'agir d'une installation de climatisation, auquel cas le fluide ou corps que l'on refroidit (généralement de l'air et éventuellement un ou plusieurs produits, objets ou organismes) est situé dans un local ou un habitacle de véhicule (pour une installation mobile). Il peut s'agir d'une installation de réfrigération ou d'une installation de congélation (ou installation cryogénique), auquel cas le fluide ou corps que l'on refroidit comprend généralement de l'air et un ou plusieurs produits, objets ou organismes, situés dans un local ou un contenant.

L'invention repose sur l'utilisation de fluides de transfert de chaleur dont l'inflammabilité à une humidité relative H₁ est inférieure à l'inflammabilité à l'humidité relative de référence égale à 50 % (la valeur H₁ étant elle-même inférieure à 50 %).

Selon un premier aspect, l'invention propose de mettre en œuvre le procédé et l'installation ci-dessus avec un tel fluide de transfert de chaleur et avec une humidité relative de l'air dans l'enceinte inférieure à la valeur seuil H₁ choisie. Ainsi, le procédé est mis en œuvre (et l'installation fonctionne) dans des conditions où l'inflammabilité du fluide de transfert de chaleur est inférieure à son inflammabilité à l'humidité relative de 50 % de référence.

La valeur d'humidité relative de 50 % est celle qui est utilisée de manière standardisée pour la détermination de l'inflammabilité d'un fluide de transfert de chaleur, selon la norme ASHRAE 34-2007.

Par conséquent, l'invention peut être mise en œuvre en choisissant par exemple une valeur seuil H₁=35 % ou 30 % ou 25 % ou 20 % ou 15 % ou 10 % ou 5 %. Corrélativement, l'humidité relative de l'air dans l'enceinte est inférieure ou égale à 35 % ou 30 % ou 25 % ou 20 % ou 15 % ou 10 % ou 5 %.

Selon un mode de réalisation avantageux, l'invention permet de diminuer les risques d'incendie ou d'explosion dans l'enceinte et donc de limiter les mesures de sécurité contre les risques d'incendie ou d'explosion, par rapport à la mise en œuvre / au fonctionnement de référence à 50 % d'humidité relative. Dans certains cas, l'invention permet de se dispenser de tout ou partie des mesures de sécurité à prendre vis-à-vis des risques d'incendie ou d'explosion, par rapport à la mise en œuvre / au fonctionnement de référence à 50 % d'humidité relative. Dans certains cas, l'invention permet d'utiliser pour une application donnée un fluide de transfert de chaleur qu'il était impossible d'utiliser (pour des raisons de sécurité) à 50 % d'humidité relative.

Les mesures de sécurité contre les risques d'incendie ou d'explosion peuvent comprendre notamment la limitation de la quantité de fluide de transfert de chaleur dans le cycle de compression de vapeur ; aussi, l'invention peut permettre d'augmenter la quantité de fluide de transfert de chaleur dans le cycle de compression de vapeur et donc d'améliorer l'efficacité du refroidissement ou du chauffage.

Les mesures de sécurité contre les risques d'incendie ou d'explosion peuvent également comprendre la présence de dispositifs de sécurité tels que systèmes de ventilation, dispositifs d'évacuation du personnel, systèmes de détection de fuite de fluide de transfert de chaleur, systèmes d'alarme, équipements de lutte contre les incendies, bâtiment résistant au feu et / ou antidéflagrant... ; aussi, l'invention peut permettre d'alléger les contraintes sur tout ou partie de ces dispositifs de sécurité, voire de se dispenser de certains de ces dispositifs de sécurité ou de tous.

Les mesures de sécurité contre les risques d'incendie ou d'explosion sont généralement fixées dans la norme NF EN 378 d'avril 2008, en fonction de la classification de sécurité figurant dans la norme ASHRAE 34-2007 (éventuellement modifiée comme indiqué ci-dessus). Aussi, selon des modes de réalisation avantageux :
- le fluide de transfert de chaleur est classé A3 si son inflammabilité est déterminée à 50 % d'humidité relative et est classé A2 ou A2L ou A1 si son inflammabilité est déterminée à l'humidité relative H₁ ; ou
- le fluide de transfert de chaleur est classé A2 si son inflammabilité est déterminée à 50 % d'humidité relative et est classé A2L ou A1 si son inflammabilité est déterminée à l'humidité relative H₁ ; ou
- le fluide de transfert de chaleur est classé A2L si son inflammabilité est déterminée à 50 % d'humidité relative et est classé A1 si son inflammabilité est déterminée à l'humidité relative H₁ ; ou
- le fluide de transfert de chaleur est classé B3 si son inflammabilité est déterminée à 50 % d'humidité relative et est classé B2 ou B2L ou B1 si son inflammabilité est déterminée à l'humidité relative H₁ ; ou
- le fluide de transfert de chaleur est classé B2 si son inflammabilité est déterminée à 50 % d'humidité relative et est classé B2L ou B1 si son inflammabilité est déterminée à l'humidité relative H₁ ; ou
- le fluide de transfert de chaleur est classé B2L si son inflammabilité est déterminée à 50 % d'humidité relative et est classé B1 si son inflammabilité est déterminée à l'humidité relative H₁.

L'humidité relative de l'air dans l'enceinte est maintenue à un niveau inférieur ou égal à H₁ soit sans intervention spécifique, soit par une intervention spécifique.

Le maintien de l'humidité relative sans intervention spécifique peut être obtenu parce que l'air de l'environnement est naturellement suffisamment sec (selon la situation géographique et climatique de l'installation).

Une autre situation possible est celle selon laquelle l'air de l'enceinte est déshumidifié par le circuit de compression de vapeur lui-même. C'est en particulier le cas lorsque le fluide qui est chauffé ou refroidi par le procédé / l'installation selon l'invention est l'air contenu dans l'enceinte lui-même.

En effet, en cas de refroidissement, la teneur de l'air en eau a tendance à diminuer par condensation de vapeur d'eau, par exemple au contact de la surface extérieure de l'évaporateur, ce qui peut conduire à une réduction de l'humidité relative au niveau souhaité. L'eau condensée est usuellement récupérée par des moyens de collecte d'eau liquide et évacuée.

Par ailleurs, l'humidité relative peut être maintenue activement à un niveau inférieur à la valeur H₁. Pour ce faire, on peut munir l'enceinte de moyens de déshumidification, avantageusement couplés à un capteur d'humidité avec une boucle de rétroaction. Les moyens de déshumidification peuvent comprendre par exemple des moyens de condensation de la vapeur d'eau dans l'air de l'enceinte par refroidissement (ces moyens étant distincts du circuit de compression de vapeur lui-même), des moyens de condensation de la vapeur d'eau dans l'air de l'enceinte par compression de l'air et / ou ils peuvent comprendre un agent déshydratant mis en contact avec l'air de l'enceinte ou avec l'air entrant dans l'enceinte. Les agents déshydratants comprennent les agents d'absorption chimique (par exemple chlorure de lithium), les agents d'adsorption (par exemple alumine activée, gel de silice, charbon actif ou tamis moléculaire) et les agents de perméation (membranes de fibres creuses et poreuses).

L'agent déshydratant est mis cycliquement en contact avec un flux d'air à déshumidifier et avec un flux d'air relativement sec destiné à régénérer l'agent déshydratant, dans des conditions de température et / ou de pression différentes. Par exemple, le flux d'air à déshumidifier peut être l'air entrant dans l'enceinte, et le flux d'air relativement sec destiné à la régénération peut être un flux d'air de l'enceinte qui est refoulé vers l'extérieur après le contact avec l'agent déshydratant. Des moyens de rotation de l'agent déshydratant peuvent permettre de le mettre cycliquement en contact avec chacun des deux flux. La régénération de l'agent déshydratant peut également être effectuée par apport de chaleur.

Dans tous les cas, et même lorsque l'humidité relative est maintenue au niveau souhaité sans intervention spécifique, il peut être utile de prévoir un capteur d'humidité dans l'enceinte afin de vérifier que l'humidité relative de l'air reste bien inférieure à la valeur seuil H₁. Un système d'alerte peut être prévu en cas de dépassement du seuil d'humidité relative H₁. Un système de rétroaction peut permettre de réguler l'humidité relative lorsque des moyens de déshumidification sont présents.

L'enceinte selon l'invention peut être un espace accueillant du public ou du personnel ou non. De préférence, cette enceinte n'accueille essentiellement pas de public ou de personnel (sauf opérations périodiques de maintenance) et peut par exemple être une salle des machines. En effet, une régulation de l'humidité relative à une valeur faible peut être inconfortable pour les humains.

Lorsque plus d'une enceinte contient une partie du circuit de compression de vapeur, il peut être souhaitable de maintenir l'humidité relative de l'air de chacune des enceintes à un niveau inférieur à la valeur seuil H₁. Selon un mode de réalisation, il en va de même pour l'ensemble des espaces qui sont susceptibles d'être contaminés par une éventuelle fuite de fluide de transfert de chaleur.

Les fluides de transfert de chaleur pouvant convenir pour la mise en œuvre de l'invention peuvent consister en un composé de transfert de chaleur en un mélange de deux ou plus de deux composés de transfert de chaleur.

Le fluide de transfert de chaleur comprend au moins une fluorooléfine de formule XCF_{z}R_{3-z}, dans laquelle X est un radical alkyle insaturé en C₂, C₃ ou C₄, substitué ou non, chaque R est indépendamment Cl, F, Br, I ou H et z est un entier de 1 à 3.

Selon un mode de réalisation préféré, cette fluorooléfine est le 2,3,3,3-tétrafluoropropène (ou HFO-1234yf) ou le 1,3,3,3-tétrafluoropropène (ou HFO-1234ze, sous ses deux formes E et Z, et de préférence sous sa forme E). Ces composés sont utilisés en mélange, par exemple en mélange binaire dans un rapport massique compris de préférence entre 5:95 et 99:1, de manière plus particulièrement préférée entre 20:80 et 99:1 et de manière tout particulièrement préférée entre 60:40 et 99:1.

Le HFO-1234yf et le HFO-1234ze présentent tous deux une inflammabilité plus faible à une humidité relative inférieure à 50 % qu'à une humidité relative de 50 %. En particulier, le HFO-1234ze est inflammable en tant que tel à 50 % d'humidité relative mais est non inflammable en tant que tel à une faible humidité relative et notamment à environ 0 % d'humidité relative. De même, un mélange comprenant une proportion suffisamment élevée de HFO-1234ze est non inflammable à faible humidité relative et notamment à environ 0 % d'humidité relative.

Le fluide de transfert de chaleur comprend en outre au moins un autre composé de transfert de chaleur, de préférence choisi parmi les hydrocarbures, les hydrochlorofluorocarbures, les hydrofluorocarbures, les fluoroéthers et les éthers d'hydrocarbures, et de manière plus particulièrement préférée choisi parmi les hydrochlorofluorocarbures, les hydrofluorocarbures et les fluoroéthers.

Selon un mode de réalisation préféré, cet autre composé de transfert de chaleur peut être le 1,1,1,2-tétrafluoroéthane (ou HFC-134a) et / ou le difluorométhane (ou HFC-32) et /ou le pentafluoroéthane (ou HFC-125).

En particulier, le fluide de transfert de chaleur peut être un mélange de HFO-1234yf et de HFC-134a, dans un rapport massique compris de préférence entre 50:50 et 99:1, de manière plus particulièrement préférée entre 65:35 et 92:8 et de manière tout particulièrement préférée entre 74:26 et 91:9. Plus la proportion de HFO-1234yf est importante dans le fluide, plus le fluide est inflammable et plus le GWP est faible. Réduire l'humidité relative permet de réduire l'inflammabilité du fluide et donc éventuellement de diminuer la proportion de HFC-134a dans le mélange et donc le GWP du mélange. Par exemple, le fluide comprenant 35 % en masse de HFC-134a est non inflammable à une humidité relative inférieure ou égale à 32 % et il présente un GWP de 503 ; le fluide comprenant 26 % en masse de HFC-134a est non inflammable à une humidité relative inférieure ou égale à 15 % et il présente un GWP de 375 ; enfin, le fluide comprenant 20 % de HFC-134a est non inflammable à une humidité relative voisine de 0 %.

Le fluide de transfert de chaleur peut également être un mélange de HFO-1234ze et de HFC-134a, dans un rapport massique compris de préférence entre 50:50 et 99:1, de manière plus particulièrement préférée entre 65:35 et 98:2 et de manière tout particulièrement préférée entre 74:26 et 98:2.

Le fluide de transfert de chaleur peut également être un mélange de HFO-1234yf, de HFC-134a et de HFC-32. Dans ce fluide encore, les proportions sont ajustées selon l'inflammabilité souhaitée à une humidité relative donnée, et selon le GWP souhaité. Le fluide comprenant 10 % en masse de HFC-32, 50 % en masse de HFC-134a et 40 % en masse de HFO-1234yf est non inflammable en tant que tel à 50 % d'humidité relative. Toutefois, la composition WCFF obtenue à partir de fluide comprend 25 % de HFC-32, 37 % de HFC-134a et 38 % de HFO-1234yf. Or cette composition est inflammable à 50 % d'humidité relative, si bien que le fluide lui-même est classifié en catégorie A2L selon la norme ASHRAE 34-2007 modifiée (telle que décrite ci-dessus). A une humidité relative voisine de 0 %, la composition WCFF est non inflammable. Par conséquent, la réduction de l'humidité relative permet de changer la classification du fluide ci-dessus de la catégorie A2L à la catégorie A1.

De préférence, le mélange ci-dessus est utilisé selon rapport massique qui est de 2-80:2-80:2-60 (HFO-1234yf:HFC-134a:HFC-32) et qui est de manière plus particulièrement préférée de 2-80:2-80:2-12 (fluide à faible capacité volumétrique) ou de 2-80:2-80:15-30 (fluide à capacité volumétrique moyenne) ou de 2-53:2-53:45-60 (fluide à capacité volumétrique élevée).

Le fluide de transfert de chaleur peut également être un mélange de HFO-1234ze, de HFC-134a et de HFC-32 (de préférence selon un rapport massique HFO-1234ze:HFC-134a:HFC-32 de 1-90:1-90:1-65) ou un mélange de HFO-1234ze, de HFO-1234yf et de HFC-32 (de préférence selon un rapport massique HFO-1234ze:HFO-1234yf:HFC-32 de 1-90:1-90:1-65).

Le fluide de transfert de chaleur peut également être un mélange de HFP-1234yf, de HFO-1234ze et de HFC-134a, dans un rapport massique qui est de préférence de 1-80:2-93:6-21. Si le fluide contient de 1 à 80 % en masse de HFO-1234ze, de 45 à 60 % en masse de HFC-134a et de 2 à 54 % en masse de HFO-1234yf, il est non inflammable à forte humidité relative. Si le fluide contient de 1 à 80 % en masse de HFO-1234ze, de 21 à 45 % en masse de HFC-134a et de 2 à 78 % en masse de HFO-1234yf, il est non inflammable à humidité relative moyenne. Si le fluide contient de 1 à 80 % en masse de HFO-1234ze, de 6 à 21 % en masse de HFC-134a et de 2 à 93 % en masse de HFO-1234yf, il est non inflammable à faible humidité relative.

Le fluide de transfert de chaleur peut également être du 3,3,3-trifluoropropène (ou HFO-1243zf)en mélange avec du HFC-134a, ou avec du HFC-134a et du HFC-32, ou avec du HFO-1234yf, ou avec du HFO-1234ze, ou avec du HFO-1234yf et du HFC-134a, ou avec du HFO-1234ze et du HFC-134a.

Le fluide de transfert de chaleur peut également être un mélange binaire de HFO-1234yf et de HFC-125, avec une proportion massique de HFC-125 qui est de préférence de 15 à 30 %.

Le fluide de transfert de chaleur peut également être un mélange binaire de HFO-1234ze et de HFC-125, avec une proportion massique de HFC-125 qui est de préférence de 2 à 20 %.

Le fluide de transfert de chaleur peut également être un mélange ternaire de HFO-1234yf ou de HFO-1234ze, avec du HFC-32 et du HFC-125. Le HFC-32 est de préférence présent en une proportion massique de 5 à 50 %, le HFC-125 est de préférence présent en une proportion massique de 2 à 20 % et le HFO-1234yf ou le HFO-1234ze est de préférence présent en une proportion massique de 30 à 90 %.

Des fluides de transfert de chaleur plus particulièrement préférés ont la composition (massique) suivante :
- de 15 à 35 % de HFC-32, de 5 à 20 % de HFC-125 et de 45 à 80 % de HFO-1234yf ;
- de 18 à 25 % de HFC-32, de 8 à 20 % de HFC-125 et de 55 à 74 % de HFO-1234yf ;
- de 15 à 50 % de HFC-32, de 5 à 20 % de HFC-125 et de 30 à 80 % de HFO-1234ze;
- de 30 à 40 % de HFC-32, de 8 à 20 % de HFC-125 et de 40 à 62 % de HFO-1234ze;
- de 5 à 30 % de HFC-32, de 5 à 20 % de HFC-125 et de 50 à 90 % de HFO-1234ze ;
- de 5 à 20 % de HFC-32, de 5 à 20 % de HFC-125 et de 60 à 90 % de HFO-1234ze ;
- de 20 à 40 % de HFC-32, de 5 à 20 % de HFC-125 et de 40 à 75 % de HFO-1234ze;
- de 25 à 40 % de HFC-32, de 5 à 20 % de HFC-125 et de 40 à 70 % de HFO-1234ze.

Le fluide de transfert de chaleur peut également être un mélange quaternaire de HFO-1234ze, de HFC-32, de HFC-125 et de HFC-134a. Le HFC-32 est de préférence présent en une proportion massique de 15 à 35 %, le HFC-125 est de préférence présent en une proportion massique de 15 à 35 %, le HFC-134a est de préférence présent en une proportion massique de 15 à 55 % et le HFO-1234ze est de préférence présent en une proportion massique de 15 à 55 %.

Le fluide de transfert de chaleur peut également être un mélange quaternaire de HFO-1234yf, de HFC-32, de HFC-125 et de HFC-134a. Le HFC-32 est de préférence présent en une proportion massique de 15 à 35 %, le HFC-125 est de préférence présent en une proportion massique de 15 à 35 %, le HFC-134a est de préférence présent en une proportion massique de 15 à 55 % et le HFO-1234yf est de préférence présent en une proportion massique de 15 à 55 %.

Le fluide de transfert de chaleur peut être mélangé avec un ou plusieurs additifs pour fournir la composition de transfert de chaleur circulant dans le circuit de compression de vapeur. Les additifs peuvent notamment être choisis parmi les lubrifiants, les stabilisants, les tensioactifs, les agents traceurs, les agents fluorescents, les agents odorants et les agents de solubilisation.

Le ou les stabilisants, lorsqu'ils sont présents, représentent de préférence au plus 5 % en masse dans la composition de transfert de chaleur. Parmi les stabilisants, on peut citer notamment le nitrométhane, l'acide ascorbique, l'acide téréphtalique, les azoles tels que le tolutriazole ou le benzotriazole, les composés phénoliques tels que le tocophérol, l'hydroquinone, le t-butyl hydroquinone, le 2,6-di-ter-butyl-4-méthylphénol, les époxydes (alkyl éventuellement fluoré ou perfluoré ou alkényl ou aromatique) tels que les n-butyl glycidyl éther, hexanediol diglycidyl éther, allyl glycidyl éther, butylphénylglycidyl éther, les phosphites, les phosphonates, les thiols et les lactones.

A titre de lubrifiants on peut notamment utiliser des huiles minérales, des huiles silicones, des paraffines, des naphtènes, des paraffines synthétiques, des alkylbenzènes, des poly-alpha oléfines, des polyalkène glycols, des polyol esters et / ou des polyvinyléthers.

A titre d'agents traceurs (susceptibles d'être détectés) on peut citer les hydrofluorocarbures, les hydrofluorocarbures deutérés, les hydrocarbures deutérés, les perfluorocarbures, les fluoroéthers, les composés bromés, les composés iodés, les alcools, les aldéhydes, les cétones, le protoxyde d'azote et les combinaisons de ceux-ci. L'agent traceur est différent du ou des composés de transfert de chaleur composant le fluide de transfert de chaleur.

A titre d'agents de solubilisation, on peut citer les hydrocarbures, le diméthyléther, les polyoxyalkylène éthers, les amides, les cétones, les nitriles, les chlorocarbures, les esters, les lactones, les aryl éthers, les fluoroéthers et les 1,1,1-trifluoroalcanes. L'agent de solubilisation est différent du ou des composés de transfert de chaleur composant le fluide de transfert de chaleur.

A titre d'agents fluorescents, on peut citer les naphthalimides, les perylènes, les coumarines, les anthracènes, les phénanthracènes, les xanthènes, les thioxanthènes, les naphthoxanhtènes, les fluorescéines et les dérivés et combinaisons de ceux-ci.

A titre d'agents odorants, on peut citer les alkylacrylates, les allylacrylates, les acides acryliques, les acrylesters, les alkyléthers, les alkylesters, les alcynes, les aldéhydes, les thiols, les thioéthers, les disulfures, les allylisothiocyanates, les acides alcanoïques, les aminés, les norbornènes, les dérivés de norbornènes, le cyclohexène, les composés aromaiques hétérocycliques, l'ascaridol, l'o-méthoxy(méthyl)-phénol et les combinaisons de ceux-ci.

### EXEMPLES

Les exemples suivants illustrent l'invention sans la limiter.

### Exemple 1 : influence de l'humidité relative sur l'inflammabilité du HFO-1234yf

Des tests d'inflammabilité du HFO-1234yf ont été effectués, en conditions humides et en conditions sèches selon le protocole de la norme ASTM E681. Une sphère de gaz en verre est disposée dans une étuve maintenue à 25°C. La sphère est mise sous vide, le gaz à tester est introduit, on complète avec de l'air jusqu'à la pression atmosphérique, on déclenche une étincelle dans le mélange ainsi préparé et on observe l'éventuel front de flamme sur plus de 90° par rapport au point d'ignition. Puis la quantité de gaz est modifiée jusqu'à atteindre un angle supérieur ou égal à 90° et à encadrer la zone d'inflammation et de non inflammation. Les tests sont réalisés à 60°C.

L'air utilisé dans le test est soit de l'air ambiant d'humidité relative contrôlée avec un hygromètre (entre 35 et 45 % d'humidité relative, soit une teneur en eau de 12 mbar en moyenne) ; soit de l'air sec synthétique Praxair 5.0 (avec une spécification maximale de 2 vpm d'eau).

En conditions humides, la limite inférieure d'inflammabilité constatée est de 6,1 % en volume et la limite supérieure d'inflammabilité est de 12,0 % en volume.

En conditions sèches, la limite inférieure d'inflammabilité constatée est de 7,6 % en volume et la limite supérieure d'inflammabilité est de 10,5 % en volume.

L'inflammabilité du HFO-1234yf est donc réduite (au sens de la présente demande) par une diminution de l'humidité relative de l'air.

### Exemple 2 : influence de l'humidité relative sur l'inflammabilité du mélange HFO-1234vf / HFC-134a

Des tests sont effectués de manière similaire à l'exemple 1 sur des mélanges binaires HFO-1234yf / HFC-134a de différentes compositions. On utilise un air à 60 % d'humidité relative (air ambiant, valeur d'humidité relative contrôlée par un hygromètre), un air à 40 % d'humidité relative (obtenu par dilution de l'air ambiant avec l'air sec), un air à 20 % d'humidité relative (obtenu par dilution de l'air ambiant avec l'air sec) et l'air sec à environ 0 % d'humidité relative.

On détermine pour chaque condition d'humidité relative une teneur maximale en HFO-1234yf (ou une teneur minimale en HFC-134a) dans le mélange binaire permettant d'avoir un mélange non inflammable (aucune propagation de flamme sur plus de 90°).

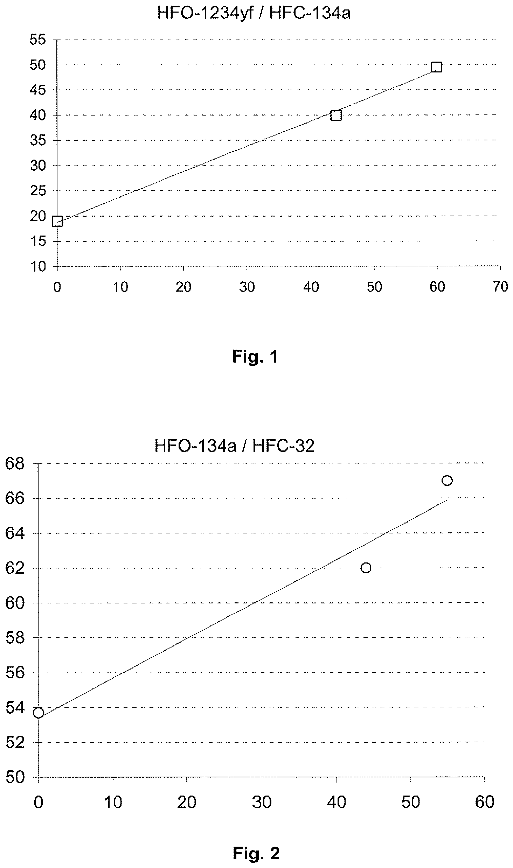

Les résultats sont représentés sur la **figure 1**. La perte de 1 % d'humidité relative permet de réduire d'environ 0,5 % la proportion massique de HFC-134a sans dégrader l'inflammabilité du mélange.

### Exemple 3 (n'illustrant pas l'invention) : influence de l'humidité relative sur l'inflammabilité du mélange HFC-134a / HFC-32

Des tests sont effectués de manière similaire à l'exemple 1 sur des mélanges binaires HFC-134a / HFC-32 de différentes compositions. On utilise un air à 55 % d'humidité relative (air ambiant, valeur d'humidité relative contrôlée par un hygromètre), un air à 44 % d'humidité relative (obtenu par dilution de l'air ambiant avec l'air sec), un air à 20 % d'humidité relative (obtenu par dilution de l'air ambiant avec l'air sec) et l'air sec à environ 0 % d'humidité relative.

On détermine pour chaque condition d'humidité relative une teneur maximale en HFC-134a (ou une teneur minimale en HFC-32) dans le mélange binaire permettant d'avoir un mélange non inflammable (aucune propagation de flamme sur plus de 90°).

Les résultats sont représentés sur la **figure 2**. La perte de 1 % d'humidité relative permet de réduire d'environ 0,2 % la proportion massique de HFC-134a sans dégrader l'inflammabilité du mélange.

L'inflammabilité du mélange HFC-134a / HFC-32 est beaucoup moins sensible à l'humidité relative que celle du mélange HFO-1234yf / HFC-134a.

### Exemple 4 : influence de l'humidité relative sur l'inflammabilité du mélange HFO-1234vf / HFC-134a / HFC-32

On utilise les résultats des tests des exemples 2 et 3 ainsi que les résultats de tests similaires effectués sur des mélanges ternaires HFO-1234yf / HFC-134a / HFC-32 afin de construire un diagramme illustrant la concentration minimale de HFC-134a dans le mélange ternaire assurant la non inflammabilité, en fonction de l'humidité relative.

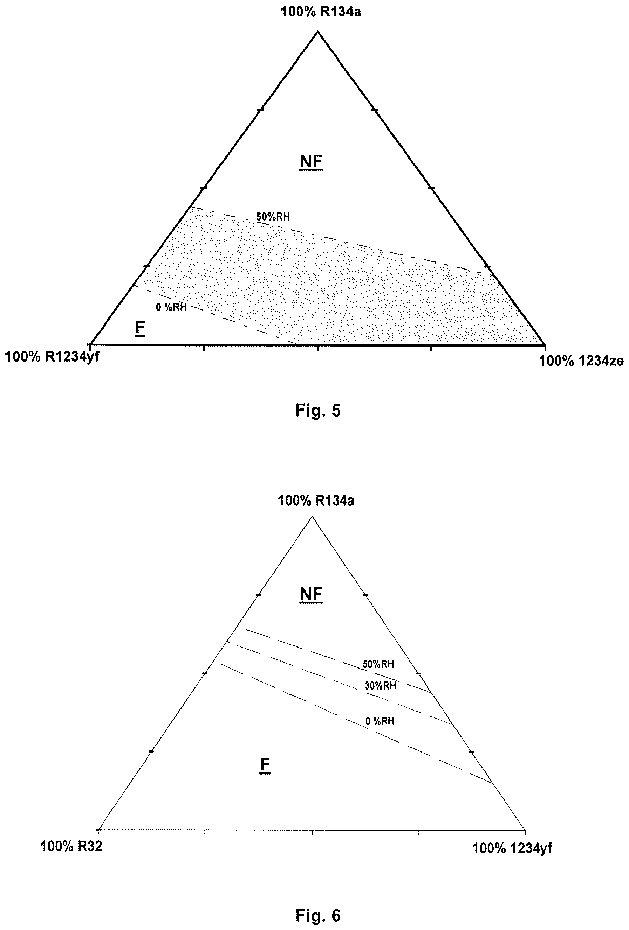

Les résultats sont représentés sur la **figure 3** et de manière différente sur la **figure 6**. On constate que plus l'humidité relative est faible, plus il est possible d'utiliser une faible proportion de HFC-134a dans le mélange ternaire, et donc de réduire le GWP du mélange, et ce sans rendre le mélange inflammable.

### Exemple 5 : influence de l'humidité relative sur l'inflammabilité du mélange HFO-1234ze / HFC-134a

Des tests sont effectués de manière similaire à l'exemple 1 sur des mélanges binaires HFO-1234ze / HFC-134a de différentes compositions.

On détermine pour chaque condition d'humidité relative une teneur maximale en HFO-1234ze (ou une teneur minimale en HFC-134a) dans le mélange binaire permettant d'avoir un mélange non inflammable (aucune propagation de flamme sur plus de 90°).

Les résultats sont représentés sur la **figure 9**. A une humidité relative de 50 %, il faut 25 % de HFC-134a pour obtenir un mélange non-inflammable. A une humidité relative de 0 % (air sec), le HFO-1234ze seul est non-inflammable.

### Exemple 6 : influence de l'humidité relative sur l'inflammabilité du mélange HFO-1234ze / HFC-134a / HFC-32

On utilise les résultats des tests des exemples précédents ainsi que les résultats de tests similaires effectués sur des mélanges ternaires HFO-1234ze / HFC-134a / HFC-32 afin de construire un diagramme représentant l'influence de l'humidité relative sur l'inflammabilité ou la non-inflammabilité de ces mélanges. Les résultats sont représentés sur la **figure 4**.

### Exemple 7 : influence de l'humidité relative sur l'inflammabilité du mélange HFO-1234ze / HFO-1234vf / HFC-134a

On utilise les résultats des tests des exemples précédents ainsi que les résultats de tests similaires effectués sur des mélanges ternaires HFO-1234ze / HFO-1234yf / HFC-134a afin de construire un diagramme représentant l'influence de l'humidité relative sur l'inflammabilité ou la non-inflammabilité de ces mélanges. Les résultats sont représentés sur la **figure 5**.

A titre d'illustration, la composition comprenant 40 % de HFO-1234yf, 40 % de HFO-1234ze et 20 % de HFC-134a présente un GWP de 290 et est non-inflammable si elle est utilisée avec une humidité relative de moins de 20 % à 23°C (soit moins de 3,1 g d'eau par kg d'air sec).

### Exemple 8 : influence de l'humidité relative sur l'inflammabilité du mélange HFO-1234ze / HFC-125

Des tests sont effectués de manière similaire à l'exemple 1 sur des mélanges binaires HFO-1234ze / HFC-125 de différentes compositions.

On détermine pour chaque condition d'humidité relative une teneur maximale en HFO-1234ze (ou une teneur minimale en HFC-125) dans le mélange binaire permettant d'avoir un mélange non inflammable (aucune propagation de flamme sur plus de 90°).

Les résultats sont représentés sur la **figure 7**.

### Exemple 9 : influence de l'humidité relative sur l'inflammabilité du mélange HFO-1234vf / HFC-125

Des tests sont effectués de manière similaire à l'exemple 1 sur des mélanges binaires HFO-1234yf / HFC-125 de différentes compositions.

On détermine pour chaque condition d'humidité relative une teneur maximale en HFO-1234yf (ou une teneur minimale en HFC-125) dans le mélange binaire permettant d'avoir un mélange non inflammable (aucune propagation de flamme sur plus de 90°).

Les résultats sont représentés sur la **figure 8**.

## Revendications

1. Procédé de refroidissement ou de chauffage d'un fluide ou d'un corps au moyen d'un circuit de compression de vapeur contenant un fluide de transfert de chaleur, ledit circuit étant entièrement contenu dans une enceinte, et l'humidité relative de l'air dans l'enceinte étant inférieure ou égale à une valeur seuil H₁ qui est inférieure à 40 %, de préférence inférieure ou égale à 35 %, de préférence inférieure ou égale à 30 %, de préférence inférieure ou égale à 25 %, de préférence inférieure ou égale à 20 %, de préférence inférieure ou égale à 15 %, de préférence inférieure ou égale à 10 %, de préférence inférieure ou égale à 5 %, l'inflammabilité du fluide de transfert de chaleur à l'humidité relative H₁ étant inférieure à l'inflammabilité du fluide de transfert de chaleur à 50 % d'humidité relative, l'humidité relative étant considérée à une température de 23°C, étant entendu que ladite humidité relative est mesurée au moyen d'un hygrostat, puis la valeur de l'humidité relative correspondante à la même teneur en eau à 23°C est déterminée, dans lequel :
• le fluide de transfert de chaleur comprend au moins une fluorooléfine de formule XCF_{z}R_{3-z}, dans laquelle X est un radical alkyle insaturé en C₂, C₃ ou C₄, substitué ou non, chaque R est indépendamment Cl, F, Br, I ou H et z est un entier de 1 à 3 ;
• le fluide de transfert de chaleur comprend en outre au moins un autre composé de transfert de chaleur, choisi parmi les hydrocarbures, les hydrochlorofluorocarbures, les hydrofluorocarbures, les fluoroéthers et les éthers d'hydrocarbures.

2. Procédé de protection contre les risques d'incendie ou d'explosion dans une enceinte contenant au moins partiellement un circuit de compression de vapeur contenant un fluide de transfert de chaleur, ledit procédé comprenant le maintien de l'humidité relative de l'air dans l'enceinte à une valeur inférieure ou égale à une valeur seuil H₁ qui est inférieure à 40 %, de préférence inférieure ou égale à 35 %, de préférence inférieure ou égale à 30 %, de préférence inférieure ou égale à 25 %, de préférence inférieure ou égale à 20 %, de préférence inférieure ou égale à 15 %, de préférence inférieure ou égale à 10 %, de préférence inférieure ou égale à 5 %, l'inflammabilité du fluide de transfert de chaleur à l'humidité relative H₁ étant inférieure à l'inflammabilité du fluide de transfert de chaleur à 50 % d'humidité relative, l'humidité relative étant considérée à une température de 23°C, étant entendu que ladite humidité relative est mesurée au moyen d'un hygrostat, puis la valeur de l'humidité relative correspondante à la même teneur en eau à 23°C est déterminée, dans lequel :
• le fluide de transfert de chaleur comprend au moins une fluorooléfine de formule XCF_{z}R_{3-z}, dans laquelle X est un radical alkyle insaturé en C₂, C₃ ou C₄, substitué ou non, chaque R est indépendamment Cl, F, Br, I ou H et z est un entier de 1 à 3 ;
• le fluide de transfert de chaleur comprend en outre au moins un autre composé de transfert de chaleur, choisi parmi les hydrocarbures, les hydrochlorofluorocarbures, les hydrofluorocarbures, les fluoroéthers et les éthers d'hydrocarbures.

3. Procédé selon l'une des revendications 1 ou 2, dans lequel le fluide de transfert de chaleur est choisi parmi :
▪ un mélange de 1,3,3,3-tétrafluoropropène et de 2,3,3,3-tétrafluoropropène, dans un rapport massique compris entre 5:95 et 99:1;
▪ un mélange de 2,3,3,3-tétrafluoropropène et de 1,1,1,2-tétrafluoroéthane, dans un rapport massique compris entre 50:50 et 99:1;
▪ un mélange de 1,3,3,3-tétrafluoropropène et de 1,1,1,2-tétrafluoroéthane, dans un rapport massique compris entre 50:50 et 99:1;
▪ un mélange de 2,3,3,3-tétrafluoropropène, de 1,1,1,2-tétrafluoroéthane et de difluorométhane, dans un rapport massique qui est de 2-80:2-80:2-60;
▪ un mélange de 1,3,3,3-tétrafluoropropène, de 1,1,1,2-tétrafluoroéthane et de difluorométhane, dans un rapport massique de 1-90:1-90:1-65;
▪ un mélange de 1,3,3,3-tétrafluoropropène, de 2,3,3,3-tétrafluoropropène et de difluorométhane, dans un rapport massique 1-90:1-90:1-65;
▪ un mélange de 1,3,3,3-tétrafluoropropène, de 2,3,3,3-tétrafluoropropène et de 1,1,1,2-tétrafluoroéthane, dans un rapport massique de 1-80:2-93:6-21 ;
▪ le 3,3,3-trifluoropropène, en mélange avec du 2,3,3,3-tétrafluoropropène ou en mélange avec du 1,3,3,3-tétrafluoropropène ou en mélange avec du 1,1,1,2-tétrafluoroéthane ou en mélange avec du 1,1,1,2-tétrafluoroéthane et du difluorométhane ou en mélange avec du 2,3,3,3-tétrafluoropropène et du 1,1,1,2-tétrafluoroéthane ou en mélange avec du 1,1,1,2-tétrafluoroéthane et du 1,3,3,3-tétrafluoropropène;
▪ un mélange de 2,3,3,3-tétrafluoropropène et de pentafluoroéthane, dans un rapport massique compris entre 70:30 et 85:15 ;
▪ un mélange de 1,3,3,3-tétrafluoropropène et de pentafluoroéthane, dans un rapport massique compris entre 80:20 et 98:2;
▪ un mélange de 2,3,3,3-tétrafluoropropène, de difluorométhane et de pentafluoroéthane, dans un rapport massique de 30-90:5-50:2-20;
▪ un mélange de 1,3,3,3-tétrafluoropropène, de difluorométhane et de pentafluoroéthane, dans un rapport massique de 30-90:5-50:2-20;
▪ un mélange de 1,3,3,3-tétrafluoropropène, de 1,1,1,2-tétrafluoroéthane, de difluorométhane et de pentafluoroéthane, dans un rapport massique de 15-55:15-55:15-35:15-35 ;
▪ un mélange de 2,3,3,3-tétrafluoropropène, de 1,1,1,2-tétrafluoroéthane, de difluorométhane et de pentafluoroéthane, dans un rapport massique de 15-55:15-55:15-35:15-35.

4. Procédé selon l'une des revendications 1 à 3, dans lequel le fluide de transfert de chaleur est choisi parmi :
∘ un mélange de 2,3,3,3-tétrafluoropropène et de 1,1,1,2-tétrafluoroéthane, dans un rapport massique compris entre 50 :50 et 99 :1,
∘ un mélange de 2,3,3,3-tétrafluoropropène, de 1,1,1,2-tétrafluoroéthane et de difluorométhane, dans un rapport massique qui est 2-80 :2-80 :-2-60,
∘ un mélange de 1,3,3,3-tétrafluoropropène et de 1,1,1,2-tétrafluoroéthane, dans un rapport massique compris entre 50 :50 et 99 :1,
∘ un mélange de 1,3,3,3-tétrafluoropropène, de 1,1,1,2-tétrafluoroéthane et de difluorométhane, dans un rapport massique qui est 1-90 :1-90 :1-65,
∘ un mélange de 1,3,3,3-tétrafluoropropène, de 2,3,3,3-tétrafluoropropène et de difluorométhane, dans un rapport massique de 1-90:1-90:1-65,
∘ un mélange de 1,3,3,3-tétrafluoropropène, de 2,3,3,3-tétrafluoropropène et de 1,1,1,2-tétrafluoroéthane, dans un rapport massique qui est 1-80:2-93 :6-21,
∘ un mélange de 1,3,3,3-tétrafluoropropène et de pentafluoroéthane, dans un rapport massique compris entre 80 :20 et 98 :2,
∘ un mélange de 2,3,3,3-tétrafluoropropène et de pentafluoroéthane, dans un rapport massique comprise entre 70 :30 et 85 :15,
∘ un mélange de 2,3,3,3-tétrafluoropropène, de difluorométhane et de pentafluoroéthane, dans un rapport massique de 30-90:5-50:2-20,
∘ un mélange de 1,3,3,3-tétrafluoropropène, de difluorométhane et de pentafluoroéthane, dans un rapport massique de 30-90:5-50:2-20,
∘ un mélange de 1,3,3,3-tétrafluoropropène, de 1,1,1,2-tétrafluoroéthane, de difluorométhane et de pentafluoroéthane, dans un rapport massique de 15-55:15-55:15-35:15-35,
∘ un mélange de 2,3,3,3-tétrafluoropropène, de 1,1,1,2-tétrafluoroéthane, de difluorométhane et de pentafluoroéthane, dans un rapport massique de 15-55:15-55:15-35:15-35.

5. Procédé selon l'une des revendications 1 à 4, dans lequel l'humidité relative de l'air dans l'enceinte est maintenue à une valeur inférieure ou égale à H₁ par déshumidification de l'air de l'enceinte, de préférence par condensation de la vapeur d'eau dans l'air de l'enceinte ou par mise en contact de l'air de l'enceinte avec un agent déshydratant.

6. Procédé selon l'une des revendications 1 à 5, dans lequel :
- le fluide de transfert de chaleur est non inflammable à l'humidité relative H₁ et est inflammable à 50 % d'humidité relative ; ou
- le fluide de transfert de chaleur est inflammable à l'humidité relative H₁ et est inflammable à 50 % d'humidité relative, et la limite inférieure d'inflammabilité du fluide de transfert de chaleur à l'humidité relative H₁ est supérieure à la limite inférieure d'inflammabilité du fluide de transfert de chaleur à 50 % d'humidité relative ; ou
- le fluide de transfert de chaleur à l'humidité relative H₁ appartient à une classe d'inflammabilité inférieure à celle du fluide de transfert de chaleur à 50 % d'humidité relative.

## Patentansprüche

1. Verfahren zum Kühlen oder Erwärmen einer Flüssigkeit oder eines Körpers mittels eines Dampfkompressionskreislaufs, der eine Wärmeübertragungsflüssigkeit enthält, wobei dieser Kreislauf vollständig in einem Raum enthalten ist, und die relative Luftfeuchtigkeit in dem Raum kleiner oder gleich einem Schwellenwert H₁ ist, der kleiner 40%, bevorzugt kleiner oder gleich 35%, bevorzugt kleiner oder gleich 30 %, bevorzugt kleiner oder gleich 25 %, bevorzugt kleiner oder gleich 20 %, bevorzugt kleiner oder gleich 15 %, bevorzugt kleiner oder gleich 10 %, bevorzugt kleiner oder gleich 5 % ist, wobei die Entflammbarkeit der Wärmeübertragungsflüssigkeit bei der relativen Feuchtigkeit H₁ kleiner ist als die Entflammbarkeit der Wärmeübertragungsflüssigkeit bei 50 % relativer Feuchtigkeit, wobei die relative Feuchtigkeit bei einer Temperatur von 23 °C betrachtet wird, mit der Maßgabe, dass die relative Feuchtigkeit mittels eines Hygrostaten gemessen und dann der Wert der relativen Feuchtigkeit, der dem gleichen Wassergehalt bei 23 °C entspricht, bestimmt wird, wobei:
• die Wärmeübertragungsflüssigkeit mindestens ein Fluorolefin der Formel XCF_{z}R_{3-z} umfasst, worin X ein substituierter oder unsubstituierter ungesättigter C₂-, C₃- oder C₄-Alkylrest ist, wobei R unabhängig Cl, F, Br, I oder H ist, und z eine ganze Zahl von 1 bis 3 ist;
• wobei die Wärmeübertragungsflüssigkeit ferner mindestens eine weitere Wärmeübertragungsverbindung umfasst, ausgewählt aus Kohlenwasserstoffen, teilhalogenierten Fluorchlorkohlenwasserstoffen, Fluorkohlenwasserstoffen, Fluorethern und Kohlenwasserstoffethern.

2. Verfahren zum Schutz gegen Brand- oder Explosionsgefahr in einem Raum, der mindestens teilweise einen Dampfkompressionskreislauf mit einer Wärmeübertragungsflüssigkeit enthält, wobei das Verfahren das Aufrechterhalten der relativen Luftfeuchtigkeit in dem Raum auf einem Wert kleiner oder gleich einem Schwellenwert H₁ umfasst, der kleiner 40 %, bevorzugt kleiner oder gleich 35 %, bevorzugt kleiner oder gleich 30 %, bevorzugt kleiner oder gleich 25 %, bevorzugt kleiner oder gleich 20 %, bevorzugt kleiner oder gleich 15 %, bevorzugt kleiner oder gleich 10 %, bevorzugt kleiner oder gleich 5 % ist, wobei die Entflammbarkeit der Wärmeübertragungsflüssigkeit bei der relativen Feuchtigkeit H₁ kleiner ist als die Entflammbarkeit der Wärmeübertragungsflüssigkeit bei 50 % relativer Feuchtigkeit, wobei die relative Feuchtigkeit bei einer Temperatur von 23 °C betrachtet wird, mit der Maßgabe, dass die relative Feuchtigkeit mittels eines Hygrostaten gemessen und dann der Wert der relativen Feuchtigkeit, der dem gleichen Wassergehalt bei 23 °C entspricht, bestimmt wird, wobei:
• die Wärmeübertragungsflüssigkeit mindestens ein Fluorolefin der Formel XCF_{z}R_{3-z} umfasst, worin X ein substituierter oder unsubstituierter ungesättigter C₂-, C₃- oder C₄-Alkylrest ist, wobei R jeweils unabhängig Cl, F, Br, I oder H ist, und z eine ganze Zahl von 1 bis 3 ist;
• wobei die Wärmeübertragungsflüssigkeit ferner mindestens eine weitere Wärmeübertragungsverbindung umfasst, ausgewählt aus Kohlenwasserstoffen, teilhalogenierten Fluorchlorkohlenwasserstoffen, Fluorkohlenwasserstoffen, Fluorethern und Kohlenwasserstoffethern.

3. Verfahren nach einem der Ansprüche 1 oder 2, wobei die Wärmeübertragungsflüssigkeit ausgewählt ist aus:
• einer Mischung aus 1,3,3,3-Tetrafluorpropen und 2,3,3,3-Tetrafluorpropen in einem Massenverhältnis zwischen 5/95 und 99/1;
• einer Mischung aus 2,3,3,3-Tetrafluorpropen und 1,1,1,2-Tetrafluorethan in einem Massenverhältnis zwischen 50/50 und 99/1;
• einer Mischung aus 1,3,3,3-Tetrafluorropen und 1,1,1,2-Tetrafluorethan in einem Massenverhältnis zwischen 50/50 und 99/1;
• einer Mischung aus 2,3,3,3-Tetrafluorpropen und 1,1,1,2-Tetrafluorethan und Difluormethan in einem Massenverhältnis, das 2-80/2-80/2-60 beträgt;
• einer Mischung aus 1,3,3,3-Tetrafluorpropen und 1,1,1,2-Tetrafluorethan und Difluormethan in einem Massenverhältnis von 1-90/1-90/1-65;
• einer Mischung aus 1,3,3,3-Tetrafluorpropen und 2,3,3,3-Tetrafluorpropen und Difluormethan in einem Massenverhältnis 1-90/1-90/1-65;
• einer Mischung aus 1,3,3,3-Tetrafluorpropen und 2,3,3,3-Tetrafluorpropen und 1,1,1,2-Tetrafluorethan in einem Massenverhältnis von 1-80/2-93/6-21;
• 3,3,3-Trifluorpropen, in Mischung mit 2,3,3,3-Tetrafluorpropen oder in Mischung mit 1,3,3,3-Tetrafluorpropen oder in Mischung mit 1,1,1,2-Tetrafluorethan oder in Mischung mit 1,1,1,2-Tetrafluorethan oder Difluormethan oder in Mischung mit 2,3,3,3-Tetrafluorpropen und 1,1,1,2-Tetrafluoreethan oder in Mischung mit 1,1,1,2- Tetrafluorethan und 1,3,3,3-Tetrafluorpropen;
• einer Mischung aus 2,3,3,3-Tetrafluorpropen und Pentafluorethan in einem Massenverhältnis zwischen 70/30 und 85/15;
• einer Mischung aus 1,3,3,3-Tetrafluorpropen und Pentafluorethan in einem Massenverhältnis zwischen 80/20 und 98/2;
• einer Mischung aus 2,3,3,3-Tetrafluorpropen, Difluormethan und Pentafluorethan in einem Massenverhältnis von 30-90/5-50/2-20;
• einer Mischung aus 1,3,3,3-Tetrafluorpropen, Difluormethan und Pentafluorethan in einem Massenverhältnis von 30-90/5-50/2-20;
• einer Mischung aus 1,3,3,3-Tetrafluorpropen und 1,1,1,2-Tetrafluorethan, Difluormethan und Pentafluorethan in einem Massenverhältnis von 15-55/15-55/15-35;
• einer Mischung aus 2,3,3,3-Tetrafluorpropen und 1,1,1,2-Tetrafluorethan, Difluormethan und Pentafluorethan in einem Massenverhältnis von 15-55/15-55/15-35/15-35.

4. Verfahren nach einem der Ansprüche 1 bis 3, wobei die Wärmeübertragungsflüssigkeit ausgewählt ist aus:
• einer Mischung aus 2,3,3,3-Tetrafluorpropen und 1,1,1,2-Tetrafluorethan in einem Massenverhältnis zwischen 50/50 und 99/1,
• einer Mischung aus 2,3,3,3-Tetrafluorpropen und 1,1,1,2-Tetrafluorethan und Difluormethan in einem Massenverhältnis, das 2-80/2-80/-2-60 beträgt,
• einer Mischung aus 1,3,3,3-Tetrafluorropen und 1,1,1,2-Tetrafluorethan in einem Massenverhältnis zwischen 50/50 und 99/1,
• einer Mischung aus 1,3,3,3-Tetrafluorpropen und 1,1,1,2-Tetrafluorethan und Difluormethan in einem Massenverhältnis, das 1-90/1-90/1-65 beträgt,
• einer Mischung aus 1,3,3,3-Tetrafluorpropen und 2,3,3,3-Tetrafluorpropen und Difluormethan in einem Massenverhältnis von 1-90/1-90/1-65,
• einer Mischung aus 1,3,3,3-Tetrafluorpropen und 2,3,3,3-Tetrafluorpropen und 1,1,1,2-Tetrafluorethan in einem Massenverhältnis, das 1-80/2-93/6-21 beträgt,
• einer Mischung aus 1,3,3,3-Tetrafluorpropen und Pentafluorethan in einem Massenverhältnis zwischen 80/20 und 98/2,
• einer Mischung aus 2,3,3,3-Tetrafluorpropen und Pentafluorethan in einem Massenverhältnis zwischen 70/30 und 85/15,
• einer Mischung aus 2,3,3,3-Tetrafluorpropen, Difluormethan und Pentafluorethan in einem Massenverhältnis von 30-90/5-50/2-20,
• einer Mischung aus 1,3,3,3-Tetrafluorpropen, Difluormethan und Pentafluorethan, in einem Massenverhältnis von 30-90/5-50/2-20,
• einer Mischung aus 1,3,3,3-Tetrafluorpropen und 1,1,1,2-Tetrafluorethan, Difluormethan und Pentafluorethan in einem Massenverhältnis von 15-55/15-55/15-35/15-35,
• einer Mischung aus 2,3,3,3-Tetrafluorpropen und 1,1,1,2-Tetrafluorethan, Difluormethan und Pentafluorethan in einem Massenverhältnis von 15-55/15-55/15-35/15-35.

5. Verfahren nach einem der Ansprüche 1 bis 4, wobei die relative Luftfeuchtigkeit in dem Raum durch Entfeuchtung der Luft in dem Raum auf einem Wert kleiner oder gleich H₁ gehalten wird, bevorzugt durch Kondensation von Wasserdampf in der Raumluft oder durch Inkontaktbringen der Raumluft mit einem Trockenmittel.

6. Verfahren nach einem der Ansprüche 1 bis 5, wobei:
- die Wärmeübertragungsflüssigkeit bei der relativen Feuchtigkeit H₁ nicht entflammbar ist und bei 50 % relativer Feuchtigkeit entflammbar ist; oder
- die Wärmeübertragungsflüssigkeit bei der relativen Feuchtigkeit H₁ entflammbar ist und bei 50 % relativer Feuchtigkeit entflammbar ist; und die untere Entflammbarkeitsgrenze der Wärmeübertragungsflüssigkeit bei der relativen Feuchtigkeit H₁ größer als die untere Entflammbarkeitsgrenze der Wärmeübertragungsflüssigkeit bei 50 % relativer Feuchtigkeit ist; oder
- die Wärmeübertragungsflüssigkeit bei der relativen Feuchtigkeit H₁ zu einer niedrigeren Entflammbarkeitsklasse gehört als die Wärmeübertragungsflüssigkeit bei 50 % relativer Feuchtigkeit.

## Claims

1. Process for cooling or heating a fluid or a body by means of a vapor compression circuit containing a heat transfer fluid, said circuit being entirely contained in an enclosure, and the relative humidity of air in the enclosure being less than or equal to a threshold value H₁ which is less than 40 %, preferably less than or equal to 35 %, preferably less than or equal to 30 %, preferably less than or equal to 25 %, preferably less than or equal to 20 %, preferably less than or equal to 15 %, preferably less than or equal to 10 %, preferably less than or equal to 5 %, the flammability of the heat transfer fluid at relative humidity H₁ being less than the flammability of the heat transfer fluid at 50 % of relative humidity, the relative humidity being considered at a temperature of 23°C, given that said relative humidity is measured by means of a hygrostat, and then the value of the relative humidity corresponding to the same water content at 23°C is determined, wherein:
• the heat transfer fluid comprises at least one fluoroolefin of formula XCF_{z}R_{3z}, wherein X is a substituted or unsubstituted, unsaturated C₂, C₃ or C₄ alkyl group, each R is independently Cl, F, Br, I or H and z is an integer from 1 to 3;
• the heat transfer fluid further comprises at least one other heat transfer compound selected from hydrocarbons, hydrochlorofluorocarbons, hydrofluorocarbons, fluoroethers and hydrocarbon ethers.

2. Process of protection against risks of fire or explosion in an enclosure at least partially containing a vapor compression circuit containing a heat transfer fluid, said method comprising maintaining the relative humidity of air in the enclosure at a value less than or equal to a threshold value H₁ which is less than 40 %, preferably less than or equal to 35 %, preferably less than or equal to 30 %, preferably less than or equal to 25 %, preferably less than or equal to 20 %, preferably less than or equal to 15 %, preferably less than or equal to 10 %, preferably less than or equal to 5 %, the flammability of the heat transfer fluid at relative humidity H₁ being less than the flammability of the heat transfer fluid at 50 % of relative humidity, the relative humidity being considered at a temperature of 23°C, given that said relative humidity is measured by means of a hygrostat, then the value of the relative humidity corresponding to the same water content at 23°C is determined, wherein:
• the heat transfer fluid comprises at least one fluoroolefin of formula XCF_{z}R_{3-z}, wherein X is a substituted or unsubstituted, unsaturated C₂, C₃ or C₄ alkyl group, each R is independently Cl, F, Br, I or H and z is an integer from 1 to 3;
• the heat transfer fluid further comprises at least one other heat transfer compound selected from hydrocarbons, hydrochlorofluorocarbons, hydrofluorocarbons, fluoroethers and hydrocarbon ethers.

3. Process according to one of claims 1 or 2, wherein the heat transfer fluid is selected from:
• a mixture of 1,3,3,3-tetrafluoropropene and 2,3,3,3-tetrafluoropropene, in a mass ratio comprised between 5/95 and 99/1;
• a mixture of 2,3,3,3-tetrafluoropropene and 1,1,1,2-tetrafluoroethane, in a mass ratio comprised between 50/50 and 99/1;
• a mixture of 1,3,3,3-tetrafluoropropene and 1,1,1,2-tetrafluoroethane, in a mass ratio comprised between 50/50 and 99/1;
• a mixture of 2,3,3,3-tetrafluoropropene, 1,1,1,2-tetrafluoroethane and difluoromethane, in a mass ratio which is 2-80/2-80/2-60;
• a mixture of 1,3,3,3-tetrafluoropropene, 1,1,1,2-tetrafluoroethane and difluoromethane, in a mass ratio of 1-90/1-90/1-65;
• a mixture of 1,3,3,3-tetrafluoropropene, 2,3,3,3-tetrafluoropropene and difluoromethane, in a mass ratio 1-90/1-90/1-65;
• a mixture of 1,3,3,3-tetrafluoropropene, 2,3,3,3-tetrafluoropropene and 1,1,1,2-tetrafluoroethane, in a mass ratio of 1-80/2-93/6-21;
• 3,3,3-trifluoropropene, in a mixture with 2,3,3,3-tetrafluoropropene or in a mixture with 1,3,3,3-tetrafluoropropene or in a mixture with 1,1,1,2-tetrafluoroethane or in a mixture with 1,1,1,2-tetrafluoroethane and difluoromethane or in a mixture with 2,3,3,3-tetrafluoropropene and 1,1,1,2-tetrafluoroethane or in a mixture with 1,1,1,2-tetrafluoroethane and 1,3,3,3-tetrafluoropropene;
• a mixture of 2,3,3,3-tetrafluoropropene and pentafluoroethane, in a mass ratio comprised between 70/30 and 85/15;
• a mixture of 1,3,3,3-tetrafluoropropene and pentafluoroethane, in a mass ratio comprised between 80/20 and 98/2;
• a mixture of 2,3,3,3-tetrafluoropropene, difluoromethane and pentafluoroethane, in a mass ratio of 30-90/5-50/2-20;
• a mixture of 1,3,3,3-tetrafluoropropene, difluoromethane and pentafluoroethane, in a mass ratio of 30-90/5-50/2-20;
• a mixture of 1,3,3,3-tetrafluoropropene, 1,1,1,2-tetrafluoroethane, difluoromethane and pentafluoroethane, in a mass ratio of 15-55/15-55/15-35;
• a mixture of 2,3,3,3-tetrafluoropropene, 1,1,1,2-tetrafluoroethane, difluoromethane and pentafluoroethane, in a mass ratio of 15-55/15-55/15-35.

4. Process according to one of claims 1 to 3, wherein the heat transfer fluid is selected from:
• a mixture of 2,3,3,3-tetrafluoropropene and 1,1,1,2-tetrafluoroethane, in a mass ratio comprised between 50/50 to 99/1,
• a mixture of 2,3,3,3-tetrafluoropropene, 1,1,1,2-tetrafluoroethane and difluoromethane, in a mass ratio which is 2-80/2-80/-2-60,
• a mixture of 1,3,3,3-tetrafluoropropene and 1,1,1,2-tetrafluoroethane, in a mass ratio comprised between 50/50 and 99/1,
• a mixture of 1,3,3,3-tetrafluoropropene, 1,1,1,2-tetrafluoroethane and difluoromethane, in a mass ratio which is 1-90/1-90/1-65,
• a mixture of 1,3,3,3-tetrafluoropropene, 2,3,3,3-tetrafluoropropene and difluoromethane, in a mass ratio of 1-90/1-90/1-65,
• a mixture of 1,3,3,3-tetrafluoropropene, 2,3,3,3-tetrafluoropropene and 1,1,1,2-tetrafluoroethane, in a mass ratio which is 1-80/2-93/6-21,
• a mixture of 1,3,3,3-tetrafluoropropene and pentafluoroethane, in a mass ratio comprised between 80/20 and 98/2,
• a mixture of 2,3,3,3-tetrafluoropropene and pentafluoroethane, in a mass ratio comprised between 70/30 and 85/15,
• a mixture of 2,3,3,3-tetrafluoropropene, difluoromethane and pentafluoroethane, in a mass ratio of 30-90/5-50/2-20,
• a mixture of 1,3,3,3-tetrafluoropropene, difluoromethane and pentafluoroethane, in a mass ratio of 30-90/5-50/2-20,
• a mixture of 1,3,3,3-tetrafluoropropene, 1,1,1,2-tetrafluoroethane, difluoromethane and pentafluoroethane, in a mass ratio of 15-55/15-55/15-35/15-35,
• a mixture of 2,3,3,3-tetrafluoropropene, 1,1,1,2-tetrafluoroethane, difluoromethane and pentafluoroethane, in a mass ratio of 15-55/15-55/15-35/15-35.

5. Process according to one of claims 1 to 4, wherein the relative humidity of air in the enclosure is maintained at a value less than or equal to H₁ by dehumidifying the enclosure air, preferably by condensing the water vapor in the air in the enclosure or by bringing the air in the enclosure into contact with a dehydrating agent.

6. Process according to one of claims 1 to 5, wherein:
- the heat transfer fluid is non-flammable at relative humidity H₁ and is flammable at 50 % of relative humidity; or
- the heat transfer fluid is flammable at relative humidity H₁ and is flammable at 50% of relative humidity, and the lower flammability limit of the heat transfer fluid at relative humidity H₁ is above the lower flammability limit of the heat transfer fluid at 50% of relative humidity; or
- the heat transfer fluid at relative humidity H₁ belongs to a flammability class below that of the heat transfer fluid at 50% of relative humidity.
